# FASCICULE DE BREVET EUROPEEN

(11) **EP 0 552 120 B1**
(45) Date de publication et mention de la délivrance du brevet: **13.12.1995**
(21) Numéro de dépôt: 93440004.5
(22) Date de dépôt: 15.01.1993
(51) Int. Cl.: A01B 61/04, A01D 34/66

(54) **Faucheuse à délestage dynamique**
Heumaschine mit dynamischer Entlastungsvorrichtung
Mower with dynamic lightening device

(30) Priorité: 17.01.1992 FR 9200624
(43) Date de publication de la demande: 21.07.1993
(73) Titulaire: KUHN S.A., F-67700 Saverne (FR)
(72) Inventeur: Wolff, Michel, F-67670 Waltenheim sur Zorn (FR)

(56) Documents cités:
- EP-A- 0 126 518
- EP-A- 0 337 909
- EP-A- 0 451 074
- Prospectus GMD 400 - 500 de la société KUHN
- Prospectus GMD 40 de la société KUHN

## Description

La présente invention concerne un premier type de faucheuse comportant :
- un mécanisme de coupe s'étendant, au travail, transversalement à la direction de travail,
- une structure d'attelage destinée à être liée à un véhicule moteur,
- une poutre-support liée d'une part à la structure d'attelage au moyen d'une première articulation d'axe géométrique dirigé vers l'avant, et liée d'autre part au mécanisme de coupe à l'aide d'une deuxième articulation d'axe géométrique dirigé vers l'avant, ladite première articulation étant également susceptible de pivoter par rapport à la structure d'attelage autour d'un troisième axe géométrique dirigé vers le haut,
et
- un organe de retenue s'étendant au moins sensiblement dans un plan vertical dirigé suivant la direction de travail et agencé entre la poutre-support et la structure d'attelage empêchant, dans les conditions normales de travail, le pivotement de la poutre-support autour dudit troisième axe géométrique, la liaison dudit organe de retenue à la poutre-support s'étendant, au travail, à une hauteur nettement inférieure à celle de l'axe géométrique de la première articulation.

La présente invention concerne aussi un deuxième type de faucheuse comportant :
- un mécanisme de coupe s'étendant, au travail, transversalement à la direction de travail,
- une structure d'attelage destinée à être liée à un véhicule moteur,
- une poutre-support liée d'une part à la structure d'attelage au moyen d'une première articulation d'axe géométrique dirigé vers l'avant, et liée d'autre part au mécanisme de coupe à l'aide d'une deuxième articulation d'axe géométrique dirigé vers l'avant, ladite première articulation étant également susceptible de pivoter par rapport à la structure d'attelage autour d'un troisième axe géométrique dirigé vers le haut,
et
- un organe de retenue agencé entre la poutre-support et la structure d'attelage empêchant, dans les conditions normales de travail, le pivotement de la poutre-support autour dudit troisième axe géométrique, la liaison dudit organe de retenue à la poutre-support s'étendant, au travail, au moins sensiblement à la même hauteur ou au-dessus de l'axe géométrique de la première articulation.

Dans l'état de la technique, il est connu ces deux types de faucheuses, notamment par le manuel d'assemblage et d'utilisation nº 9220031.00 de 1989 des Girofaucheuses GMD 400-500 et par le prospectus de la Girofaucheuse GMD 40 de la société KUHN. La poutre-support de chacune de ces faucheuses est retenue, dans sa position de travail par rapport à la structure d'attelage, au moyen d'un tirant de sécurité. Ce tirant de sécurité s'étend vers l'avant, parallèlement à la direction de travail, jusqu'à la structure d'attelage, empêchant, dans les conditions normales de travail, le pivotement de la poutre-support, donc du mécanisme de coupe, vers l'arrière, autour d'un troisième axe dirigé verticalement.

Ces deux types de faucheuses comportent également un ressort de délestage s'étendant entre la partie supérieure de la structure d'attelage et la poutre-support. Avantageusement, ce ressort de délestage permet de réduire la force avec laquelle le mécanisme de coupe repose sur le sol durant le travail.

La présente invention a pour but d'améliorer le délestage du mécanisme de coupe de ces deux types de faucheuses.

A cet effet, il est prévu selon l'invention, pour lesdits deux types de faucheuses, que ledit organe de retenue soit implanté de telle sorte qu'au travail il ait une forte inclinaison vers le haut et vers l'avant, ce qui permet d'utiliser la résistance à l'avancement agissant sur le mécanisme de coupe pour délester celui-ci grâce à la composante verticale qui en résulte au niveau de la liaison de l'organe de retenue sur la poutre-support.

Cet organe de retenue déleste le mécanisme de coupe de la manière suivante. Au travail, le mécanisme de coupe repose sur le sol avec une certaine force. En avançant, cette force engendre une résistance à l'avancement qui est, grâce à l'invention, avantageusement utilisée pour délester le mécanisme de coupe.

En effet, cette résistance à l'avancement tend à faire pivoter la poutre-support vers l'arrière autour de l'axe dirigé vers le haut, ce qui créé un effort dans l'organe de retenue. Compte tenu de la forte inclinaison de l'organe de retenue, cet effort engendre une composante verticale substantielle qui tend à soulever l'extrémité extérieure de la poutre-support, c'est-à-dire le mécanisme de coupe.

Dans le premier type de faucheuse, l'organe de retenue s'étend au moins sensiblement dans un plan vertical dirigé suivant la direction de travail. De ce fait, l'effort dans l'organe de retenue ne crée pas de couple néfaste autour de l'axe géométrique de la première articulation, ce qui risquerait d'augmenter l'effort avec lequel le mécanisme de coupe repose sur le sol.

Dans le deuxième type de faucheuse, étant donné que la liaison liant l'organe de retenue à la poutre-support s'étend au moins sensiblement à la même hauteur ou au-dessus de l'axe géométrique de la première articulation, la composante horizontale de l'effort dans l'organe de retenue ne crée pas de couple néfaste autour de l'axe géométrique de la première articulation. En particulier, lorsque ladite liaison est implantée au-dessus de l'axe géométrique de la première articulation, le délestage du mécanisme de coupe est même augmenté.

Grâce à l'organe de retenue selon l'invention, le mécanisme de coupe est donc délesté de manière dynamique.

De plus, compte tenu de son faible encombrement et de sa relative simplicité de fonctionnement, l'organe de retenue est relativement facile à réaliser.

Du reste, comme l'organe de retenue n'est normalement soumis à aucun effort lorsque la faucheuse est dans sa position de dépose, la structure d'attelage est susceptible d'être pivotée par rapport à la poutre-support autour de l'axe géométrique de la première articulation. Ceci facilite considérablement l'attelage de la faucheuse au véhicule moteur.

Selon une caractéristique supplémentaire de l'invention, il est prévu que la liaison de l'organe de retenue à la poutre-support s'étende entre l'axe géométrique de la première articulation et l'axe géométrique de la deuxième articulation.

Avantageusement, ladite liaison est implantée plus particulièrement dans la moitié extérieure de la poutre-support liée audit mécanisme de coupe.

Dans une réalisation particulièrement intéressante, cette liaison peut être située environ aux deux tiers de la distance séparant l'axe géométrique de la première articulation de l'axe géométrique de la deuxième articulation.

Par ailleurs, compte tenu du sens d'avance au travail, cette liaison est implantée à la face frontale de la poutre-support.

Selon une autre caractéristique de l'invention, il est prévu que la projection orthogonale de l'organe de retenue dans un plan vertical dirigé suivant la direction de travail, forme avec l'horizontale un angle compris entre 20 et 70°. Ceci permet un bon délestage dynamique du mécanisme de coupe.

Un délestage particulièrement avantageux est obtenu lorsque ledit angle est d'environ 45°.

Dans le premier type de faucheuse, l'organe de retenue qui s'étend vers l'avant et vers le haut, est lié à la partie inférieure de la structure d'attelage.

A cet effet, la structure d'attelage présente une forme globalement triangulaire comportant deux points d'attelage inférieurs et un point d'attelage supérieur, destinés à être liés aux trois points d'attelage du véhicule moteur, et l'organe de retenue est lié à ladite structure d'attelage dans le voisinage du point d'attelage inférieur en regard du mécanisme de coupe.

Dans le deuxième type de faucheuse, l'organe de retenue s'étend vers l'avant et, en vue de dessus, vers l'axe géométrique de la première articulation.

En vue de dessus, cet organe de retenue forme, par rapport à la direction de travail, un angle d'environ 60°.

Par ailleurs, dans ce deuxième type de faucheuse, la structure d'attelage comporte un portique comprenant une poutre supérieure et ledit organe de retenue est lié audit portique dans le voisinage de l'extrémité longitudinale de la poutre supérieure dirigée vers le mécanisme de coupe.

Comme pour le premier type de faucheuse, la structure d'attelage du deuxième type de faucheuse comporte trois points d'attelage destinés à être liés à l'attelage trois points d'un véhicule moteur.

Pour les deux types de faucheuses, l'organe de retenue peut en outre être lié successivement à la structure d'attelage en plusieurs points de liaison implantés chacun à une hauteur différente à ladite structure d'attelage, de sorte à pouvoir modifier l'effort de délestage par simple changement dudit point de liaison.

Dans une réalisation intéressante de l'invention, l'organe de retenue peut être une bielle articulée d'une part à la structure d'attelage au moyen d'une première liaison rotule et d'autre part à la poutre-support au moyen d'une deuxième liaison rotule.

Avantageusement, l'organe de retenue pourra aussi être réalisé sous forme d'un tirant de sécurité autorisant le pivotement du mécanisme de coupe vers l'arrière, lorsque celui-ci rencontre un obstacle.

Selon une autre caractéristique de l'invention, il est encore prévu que, vu suivant la direction d'avance au travail, l'axe géométrique de la première articulation s'étende au moins sensiblement au centre du triangle défini par les trois points d'attelage de la structure d'attelage.

En sus, l'axe géométrique de la première articulation et le troisième axe géométrique sont au moins sensiblement concourants.

La deuxième articulation, quant à elle, est implantée dans le premier type de faucheuse, à la partie inférieure du mécanisme de coupe.

A l'opposé, dans le deuxième type de faucheuse, la deuxième articulation est implantée à la partie supérieure du mécanisme de coupe.

Toutefois, dans les deux types de faucheuses, la deuxième articulation peut s'étendre dans le voisinage de l'extrémité intérieure du mécanisme de coupe.

De ce fait, l'organe de retenue selon l'invention déleste plus particulièrement l'extrémité intérieure du mécanisme de coupe.

D'après une autre caractéristique de l'invention, le mécanisme de coupe est en sus délesté au moyen d'un organe de délestage.

Dans les réalisations selon l'invention dans lesquelles la deuxième articulation s'étend dans le voisinage de l'extrémité intérieure du mécanisme de coupe, il est prévu que l'organe de délestage s'étende entre la structure d'attelage et le mécanisme de coupe.

L'extrémité extérieure du mécanisme de coupe est de ce fait également délestée.

En vue du transport, les deux types de faucheuses comportent aussi un organe de manoeuvre s'étendant entre la structure d'attelage et le mécanisme de coupe, de sorte à amener le mécanisme de coupe dans une position relevée de transport.

Il est en sus prévu que lors de la dépose, le mécanisme de coupe s'étende longitudinalement sur le sol et que la poutre-support repose sur le sol au moyen d'une béquille.

Du reste, les deux types de faucheuses peuvent encore comporter un dispositif de traitement du produit coupé par le mécanisme de coupe.

D'autres caractéristiques de l'invention apparaissent dans la description suivante de deux exemples non limitatifs de réalisation faite en référence au dessin annexé sur lequel :
- la figure 1 représente, en position de travail, une faucheuse selon l'invention vue de l'arrière dans le sens d'avance au travail et liée à un véhicule moteur ;
- la figure 2 représente une vue de dessus de la faucheuse de la figure 1 toujours en position de travail ;
- la figure 3 représente, en position de transport, la faucheuse de la figure 1, vue de l'arrière dans le sens d'avance au travail ;
- la figure 4 représente, en position de dépose, la faucheuse de la figure 1, vue de l'arrière dans le sens d'avance au travail ;
- la figure 5 représente, à une échelle agrandie, une vue arrière dans le sens d'avance au travail d'un organe de verrouillage et d'un loquet destiné à verrouiller le mécanisme de coupe dans sa position relevée de transport, lorsque l'utilisateur agit sur une cordelette dudit loquet ;
- la figure 6 représente, à une échelle agrandie, une vue d'un dispositif de commande et d'une partie du ressort de traction ;
- la figure 7 représente une coupe du dispositif de commande suivant le plan VII-VII défini sur la figure 6 ;
- la figure 8 représente une coupe du dispositif de commande suivant le plan VIII-VIII défini sur la figure 7 ;
- la figure 9 représente, à une échelle agrandie, l'organe de retenue vu suivant la flèche IX définie sur la figure 2 ;
- la figure 10 représente, en position de travail, un autre exemple de réalisation d'une faucheuse selon l'invention vue de l'arrière dans le sens d'avance au travail et liée à un véhicule moteur ;
- la figure 11 représente une vue de dessus de la faucheuse de la figure 10 toujours en position de travail ;
- la figure 12 représente schématiquement l'orientation de l'organe de retenue ;
- la figure 13 représente, à une échelle agrandie, une vue latérale de l'organe de retenue ; et
- la figure 14 représente une vue de dessus de l'organe de retenue de la figure 13.

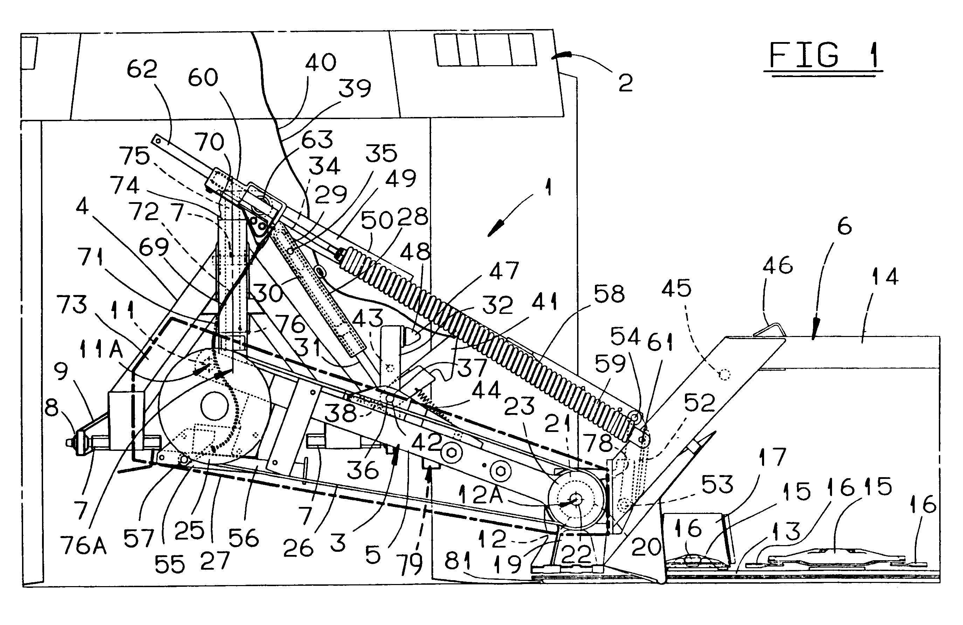

Sur les figures 1 à 9 apparaît une faucheuse (1) selon l'invention. Celle-ci est attelée à un tracteur agricole (2).

Cette faucheuse (1) se compose principalement d'un châssis (3), comportant une structure d'attelage (4) et une poutre-support (5), et d'un mécanisme de coupe (6).

La structure d'attelage (4) est munie, à sa partie frontale, de trois points d'attelage (7) destinés à être liés aux trois points d'attelage (8) du dispositif de relevage (9) du tracteur agricole (2). La poutre-support (5), quant à elle, s'étend, en vue de dessus lors du travail, transversalement à la direction de travail (10) et au moins sensiblement au même niveau que la structure d'attelage (4). A l'une de ses extrémités longitudinales, la poutre-support (5) est articulée à la structure d'attelage (4) au moyen d'un premier tourillon (11) d'axe géométrique (11A) dirigé vers l'avant et s'étendant, en vue suivant la direction d'avance (10) au travail, au moins sensiblement dans le voisinage du centre du triangle défini par les trois points d'attelage (7) de la structure d'attelage (4). A son autre extrémité longitudinale, la poutre-support (5) du châssis (3) est articulée à l'extrémité longitudinale intérieure (81) du mécanisme de coupe (6) au moyen d'un deuxième tourillon (12) d'axe géométrique (12A) dirigé vers l'avant. Grâce à un tel châssis, le mécanisme de coupe (6) peut, lors du travail, s'étendre à côté de la voie du tracteur (2) et s'adapter aisément au relief du sol.

Le mécanisme de coupe (6) comporte une barre de coupe (13) surmontée d'une structure porteuse (14). Comme représenté sur les figures 1 à 4, la barre de coupe (13) est équipée d'une pluralité de disques (15) munis à leur périphérie d'outils de coupe (16). Au travail, ces disques (15) tournent autour d'axes géométriques dirigés vers le haut. De plus, d'une manière connue de l'homme de l'art, les disques (15) qui s'étendent chacun à une extrémité longitudinale de la barre de coupe (13) sont surmontés d'un tambour (17) tournant autour du même axe géométrique que le disque (15) qu'il surmonte. Ces deux tambours (17) calibrent l'andain de produit coupé par les outils de coupe (16).

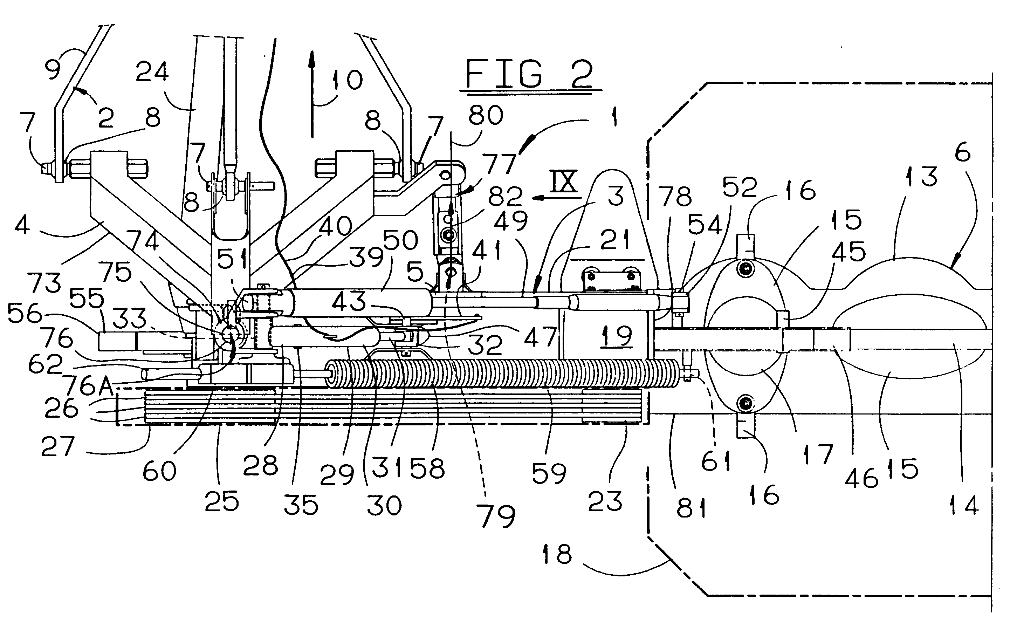

La structure porteuse (14) qui surmonte la barre de coupe (13) est notamment destinée à supporter des organes de protection (18) (représentés en traits mixtes sur la figure 2). Cette structure porteuse (14) est fixée à la barre de coupe (13) au moyen d'un carter de renvoi (19) qui s'étend dans la partie inférieure du mécanisme de coupe (6). Celui-ci remplit une double fonction : c'est d'une part par son intermédiaire que le mécanisme de coupe (6) est lié à la poutre-support (5), et il contient d'autre part une partie des organes d'entraînement entraînant les disques (15) et les tambours (17).

Le carter de renvoi (19) est en effet muni de deux portées cylindriques (20) matérialisant le deuxième tourillon (12) et susceptibles de tourner dans les ailes d'une chape (21) solidaire de la poutre-support (5). Ces portées cylindriques (20) sont d'une manière connue de l'homme de l'art, réalisées sous forme de paliers dans lesquels est guidé en rotation un arbre d'entrée (22), dont l'axe de rotation est confondu avec l'axe géométrique (12A) du deuxième tourillon (12). C'est au moyen de cet arbre d'entrée (22) que les disques (15) et les tambours (17) de la barre de coupe (13) sont entraînés en rotation.

A l'arrière, l'arbre d'entrée (22) s'étend au-dehors du carter de renvoi (19) et est lié en rotation avec une poulie (23). Cette poulie (23) fait partie des organes de transmission de la faucheuse (1) qui transmettent le mouvement depuis la prise de force (non représentée) du tracteur (2) jusqu'à l'arbre d'entrée (22) du carter de renvoi (19). Ces organes de transmission comportent par ailleurs un arbre de transmission à joints universels (24) (figure 2), une poulie (25) et des courroies (26). L'arbre de transmission (24) est lié en rotation avec la poulie (25) articulée à la poutre-support (5) et ayant un axe de rotation dirigé au moins sensiblement suivant la direction d'avance (10) au travail lorsque la faucheuse (1) est en position de fauchage (figures 1 et 2). La transmission du mouvement de la poulie (25) à la poulie (23) est assurée par les courroies (26) qui s'enroulent sur lesdites poulies (23, 25). Un capot de protection (27) (représenté en traits mixtes) entoure partiellement les poulies (23, 25) et les courroies (26).

Comme visible sur les figures 1 à 5, le châssis (3) de cette faucheuse (1) selon l'invention est muni d'un organe de verrouillage (28) destiné, lorsque cela est souhaité, à verrouiller le pivotement relatif de la poutre-support (5) par rapport à la structure d'attelage (4) autour de l'axe géométrique (11A) du premier tourillon (11). Cet organe de verrouillage (28) est constitué d'un limiteur (29), comportant un tube (30) et une tringle (31), et d'un verrou (32).

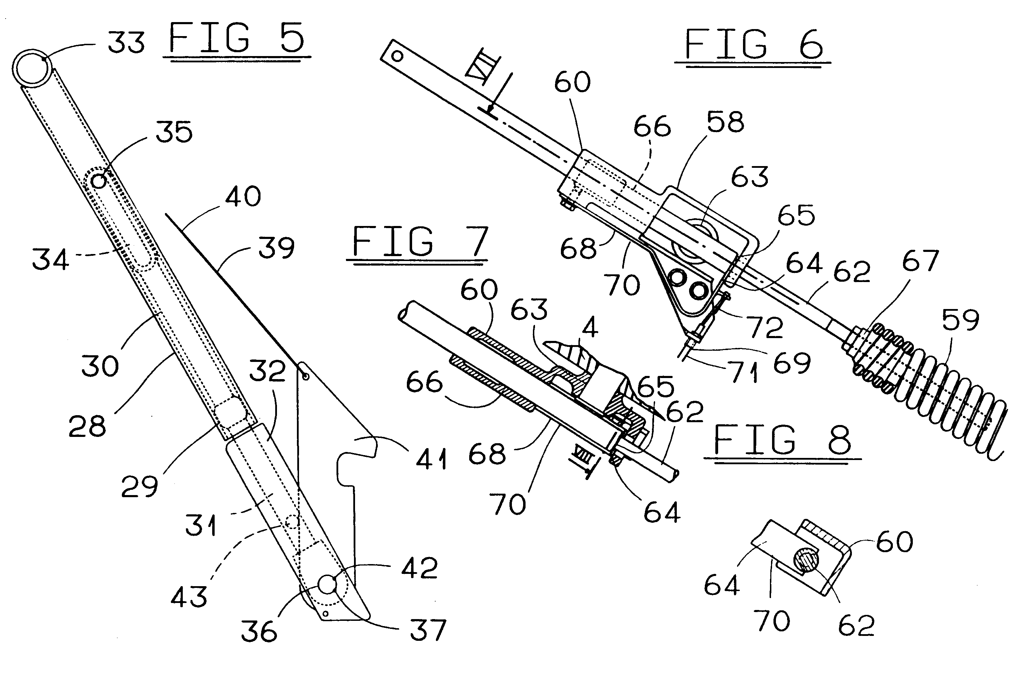

Le tube (30) est lié à l'une de ses extrémités longitudinales à la partie supérieure de la structure d'attelage (4), au moyen d'une articulation (33) (figure 5), présentant un axe géométrique au moins sensiblement parallèle à l'axe géométrique (11A) du premier tourillon (11). A l'intérieur de ce tube (30) coulisse une partie de la tringle (31) munie d'un trou oblong (34) d'axe longitudinal au moins sensiblement confondu avec l'axe longitudinal dudit tube (30). Un axe (35), fixé au tube (30), traverse le trou oblong (34) de part en part, limitant ainsi la translation de la tringle (31) dans le tube (30). L'extrémité longitudinale de l'autre partie de la tringle (31), qui s'étend à l'extérieur du tube (30), est liée à la partie médiane de la poutre-support (5) à l'aide d'une articulation (36) présentant, comme la précédente, un axe géométrique au moins sensiblement parallèle à l'axe géométrique (11A) du premier tourillon (11). De ce fait, le limiteur (29) limite le pivotement de la poutre-support (5) par rapport à la structure d'attelage (4) autour de l'axe géométrique (11A) du premier tourillon (11), et par là même, le déplacement vers le bas du deuxième tourillon (12) qui lie le mécanisme de coupe (6) à la poutre-support (5). L'utilisateur peut donc, en vue du transport par exemple, actionner le dispositif de relevage (9) du tracteur (2), de sorte à allonger au maximum le limiteur (29) (figure 5) et à soulever le mécanisme de coupe (6).

Dans cette position de type "andain", le limiteur (29) peut être verrouillé au moyen du verrou (32). A cet effet, le verrou (32) est articulé à la poutre-support (5) au moyen d'une liaison pivot (37), d'axe géométrique au moins sensiblement confondu avec l'axe géométrique de l'articulation (36) liant la tringle (31) du limiteur (29) à ladite poutre-support (5). De cette sorte, ledit verrou (32) peut être pivoté autour dudit axe géométrique d'une position déverrouillée dans laquelle la tringle (31) coulisse à l'intérieur du tube (30) vers une position verrouillée dans laquelle le verrou (32) coiffe la partie de la tringle (31) qui s'étend à l'extérieur du tube (30). Dans cette dernière position, le verrou (32) empêche toute translation de la tringle (31) à l'intérieur du tube (30), donc l'organe de verrouillage (28) est verrouillé.

La mise en position déverrouillée du verrou (32) est réalisée sous l'action d'un ressort (38). Celui-ci est agencé entre la poutre-support (5) et le verrou (32). A l'inverse, une commande à distance (39) permet à l'utilisateur d'amener et de maintenir au moins provisoirement le verrou (32) en position verrouillée. Comme représenté sur les figures 1 à 5, la commande à distance (39) est une cordelette (40), destinée d'une part à être manipulée par l'utilisateur à partir du tracteur (2), et liée d'autre part à un loquet (41) susceptible de pivoter le verrou (32) dans sa position verrouillée. En effet, le verrou (32) comporte un axe (43) par l'intermédiaire duquel le loquet (41) pivote ledit verrou (32) dans sa position verrouillée lorsque l'utilisateur tire sur la cordelette (40). A cet effet, le loquet (41) est articulé à la poutre-support (5) à l'aide d'une liaison pivot (42) d'axe géométrique au moins sensiblement confondu avec l'axe géométrique de la liaison pivot (37) du verrou (32). L'utilisateur peut donc, lorsque la faucheuse (1) est en position andain, verrouiller le limiteur (29) en tirant sur la cordelette (40).

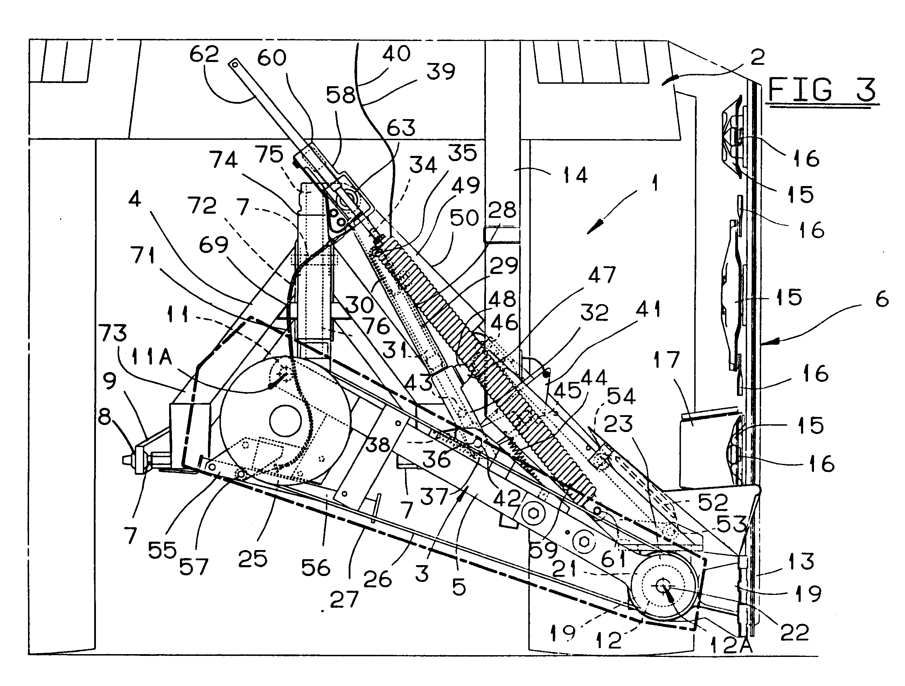

Dès que l'utilisateur cesse de tirer sur la cordelette (40), le loquet (41) pivote vers sa position initiale sous l'action d'un ressort (44) fixé à la poutre-support (5). Avantageusement, le loquet (41) permet, en sus, de verrouiller le mécanisme de coupe (6), lorsque celui-ci est amené dans une position relevée de transport (figure 3) par pivotement autour de l'axe géométrique (12A) du deuxième tourillon (12). En effet, comme visible sur la figure 3, la structure porteuse (14) du mécanisme de coupe (6) comporte un organe d'accrochage (45) auquel le loquet (41) s'accroche lorsque la cordelette (40) est détendue. Il est ainsi aisément possible de verrouiller le mécanisme de coupe (6) dans sa position relevée de transport. Le déverrouillage du mécanisme de coupe (6) s'effectue en pivotant le loquet (41) à l'encontre du ressort (44) par l'intermédiaire de la cordelette (40).

Sur la figure 3, on voit également que le maintien du verrou (32) dans sa position verrouillée est assuré par un organe de maintien (46). Celui-ci est fixé à la structure porteuse (14) du mécanisme de coupe (6) et maintient le verrou (32) dans sa position verrouillée lorsque le mécanisme de coupe (6) est en position relevée. De ce fait, dès que le mécanisme de coupe (6) est relevé, l'organe de verrouillage (28) est verrouillé, ce qui empêche le pivotement de la poutre-support (5) par rapport à la structure d'attelage (4) autour de l'axe géométrique (11A) du premier tourillon (11).

En outre, le verrou (32) de l'organe de verrouillage (28) est surmonté d'un organe élastiquement déformable (47) qui est réalisé sous forme de butée en caoutchouc (48). A la fin de la mise en position de transport du mécanisme de coupe (6), l'organe de maintien (46) dudit mécanisme de coupe (6) comprime quelque peu cette butée (48), de telle sorte que celle-ci soit capable, lors du déplacement du mécanisme de coupe (6) de la position de transport vers la position andain, de débuter ce mouvement.

A l'inverse, le passage du mécanisme de coupe (6) de la position andain, où il s'étend au moins sensiblement horizontalement au-dessus du sol, dans la position relevée de transport est réalisé au moyen d'un organe de manoeuvre (49). Dans cet exemple de réalisation, cet organe de manoeuvre (49) est constitué par un vérin hydraulique simple effet (50). Ce vérin hydraulique (50) est lié à l'une de ses extrémités longitudinales à la structure d'attelage (4) au moyen d'une articulation (51) (figure 2) et à l'autre de ses extrémités longitudinales à la structure porteuse (14) du mécanisme de coupe (6) par l'intermédiaire d'un levier pivotant (52). Celui-ci est lié à la structure porteuse (14) du mécanisme de coupe (6) par un axe (53) et au vérin hydraulique (50) par un axe supplémentaire (54). Du reste, l'articulation (51) liant le vérin hydraulique (50) à la structure d'attelage (4) et l'articulation (33) liant le tube (30) de l'organe de verrouillage (28) à ladite structure d'attelage (4) sont au moins sensiblement coaxiales.

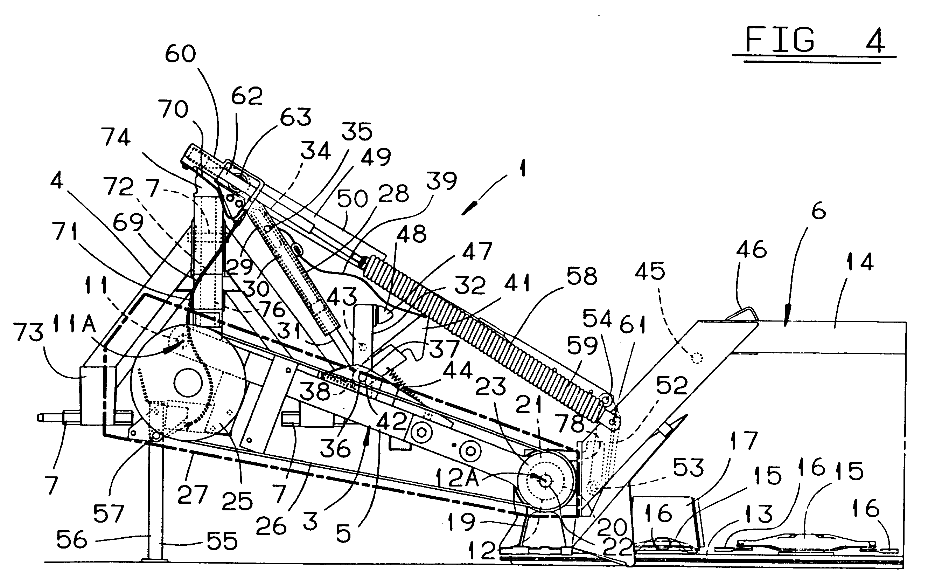

Lors de la dépose de cette faucheuse (1) (figure 4), le mécanisme de coupe (6) repose longitudinalement sur le sol et la poutre-support (5) est supportée par un organe de dépose (55). Dans cet exemple de réalisation, l'organe de dépose (55) est une béquille (56) liée à la poutre-support (5) dans le voisinage du premier tourillon (11) à l'aide d'une liaison pivot (57) d'axe géométrique au moins sensiblement parallèle à l'axe géométrique (11A) du premier tourillon (11). De ce fait, la béquille (56) peut, en vue du transport, être pivotée d'une position de dépose dans laquelle la béquille (56) est destinée à supporter la poutre-support (5) dans une position de transport et de travail, dans laquelle la béquille (56) est escamotée.

Sur la figure 4 qui montre la faucheuse (1) en position de dépose, on voit également que l'organe de verrouillage (28) est déverrouillé, c'est-à-dire qu'il est possible dans cette position de pivoter la structure d'attelage (4) par rapport à la poutre-support (5) autour de l'axe géométrique (11A) du premier tourillon (11). Un tel agencement facilite considérablement l'attelage de la faucheuse (1) aux trois points (8) du dispositif de relevage (9) du tracteur (2).

La faucheuse (1) selon l'invention comporte également un organe de traction (58) destiné à délester le mécanisme de coupe (6) au travail. Cet organe de traction (58) s'étend entre la structure d'attelage (4) et le mécanisme de coupe (6), et se compose principalement d'un ressort de traction (59) associé à un dispositif de commande (60). En effet, le ressort de traction (59) est articulé d'une part au mécanisme de coupe (6) au moyen d'une liaison pivot (61) d'axe géométrique au moins sensiblement parallèle à l'axe géométrique (12A) du deuxième tourillon (12) et d'autre part au dispositif de commande (60) au moyen d'un tirant (62) d'axe géométrique au moins sensiblement confondu avec l'axe longitudinal dudit ressort de traction (59). Le dispositif de commande (60), quant à lui, est articulé à la structure d'attelage (4) à l'aide d'une liaison pivot (63) d'axe géométrique au moins sensiblement parallèle à l'axe géométrique (11A) du premier tourillon (11). Avantageusement, dans cette réalisation selon l'invention, cette liaison pivot (63) liant le dispositif de commande (60) à la structure d'attelage (4) et l'articulation (51) liant le vérin hydraulique (50) à ladite structure d'attelage (4) sont au moins sensiblement coaxiales.

Sur les figures 6 à 8 apparaît plus particulièrement le dispositif de commande (60). Celui-ci permet d'annuler l'action du ressort de traction (59) en vue de la dépose, de sorte à pouvoir autoriser le pivotement de la structure d'attelage (4) autour de l'axe géométrique (11A) du premier tourillon (11). A cet effet, le dispositif de commande (60) comporte une butée escamotable (64) pouvant être mise en contact avec un épaulement (65) du tirant (62). Cette butée (64) peut donc occuper deux positions : une position de travail dans laquelle l'épaulement (65) du tirant (62) s'appuie contre ladite butée (64), ce qui permet au ressort de traction (59) d'alléger le mécanisme de coupe (6), et une position de dépose dans laquelle ladite butée (64) est escamotée, ce qui permet au tirant (62) de se translater dans le dispositif de commande (60), lorsque le mécanisme de coupe (6) s'étend longitudinalement sur le sol. Avantageusement, le tirant (62) est guidé dans le dispositif de commande (60) par une liaison cylindrique (66) et l'une de ses extrémités longitudinales est vissée dans un élément de liaison (67) solidaire du ressort de traction (59). Grâce à un tel agencement, l'effort de délestage du ressort de traction (59) peut aisément être réglé en vissant plus ou moins profondément le tirant (62) dans l'élément de liaison (67) du ressort de traction (59).

La mise dans la position de travail de la butée (64) est réalisée au moyen d'un ressort (68), tandis qu'une commande à distance (69) commande la mise dans la position de dépose de la butée (64). Comme représenté sur les figures 1, 3, 4, 6, 7 et 8, la butée (64) et son ressort (68) sont avantageusement combinés en un ressort à lame (70) dont l'extrémité libre a une forme de fourche. On voit également sur quelques unes de ces figures que la commande à distance (69) du dispositif de commande (60) est actionnée à l'aide de la béquille (56), de sorte que lorsque celle-ci se trouve dans sa position de travail, le ressort de traction (59) peut délester le mécanisme de coupe (6), et inversement lorsque la béquille (56) se trouve dans sa position de dépose, l'action du ressort de traction (59) est annulée. A cet effet, dans cet exemple de réalisation selon l'invention, la commande à distance (69) du dispositif de commande (60) comporte une gaine (71), à l'intérieur de laquelle peut être translaté un câble (72), lié d'une part à la béquille (56) et d'autre part à la butée (64) du dispositif de commande (60). De ce fait, dès que la béquille (56) est déplacée de sa position de travail vers sa position de dépose, ou vice versa, cela a pour effet de translater le câble (72) dans la gaine (71) et de rapprocher ou d'éloigner la butée (64) du tirant (62).

On peut encore voir sur les figures 1 à 4, que la structure d'attelage (4) de cette faucheuse (1) selon l'invention est constituée d'un cadre (73), de forme globalement triangulaire, supportant les trois points d'attelage (7), et d'un dispositif de liaison (74), liant ledit cadre (73) au premier tourillon (11). Ce dispositif de liaison (74) comporte un tourillon vertical (75) lié à son extrémité inférieure au premier tourillon (11) et articulé au cadre (73) de la structure d'attelage (4) à l'aide d'une liaison pivot (76) d'axe géométrique (76A) vertical. En outre, à l'extrémité supérieure du tourillon (75) du dispositif de liaison (74) sont fixés le dispositif de commande (60) de l'organe de traction (58), le tube (30) de l'organe de verrouillage (28) et une extrémité longitudinale du vérin hydraulique (50). Grâce à un tel agencement, le mécanisme de coupe (6) et la poutre-support (5) sont montés pivotant par rapport au cadre (73) autour de l'axe géométrique (76A) de la liaison pivot (76) du dispositif de liaison (74).

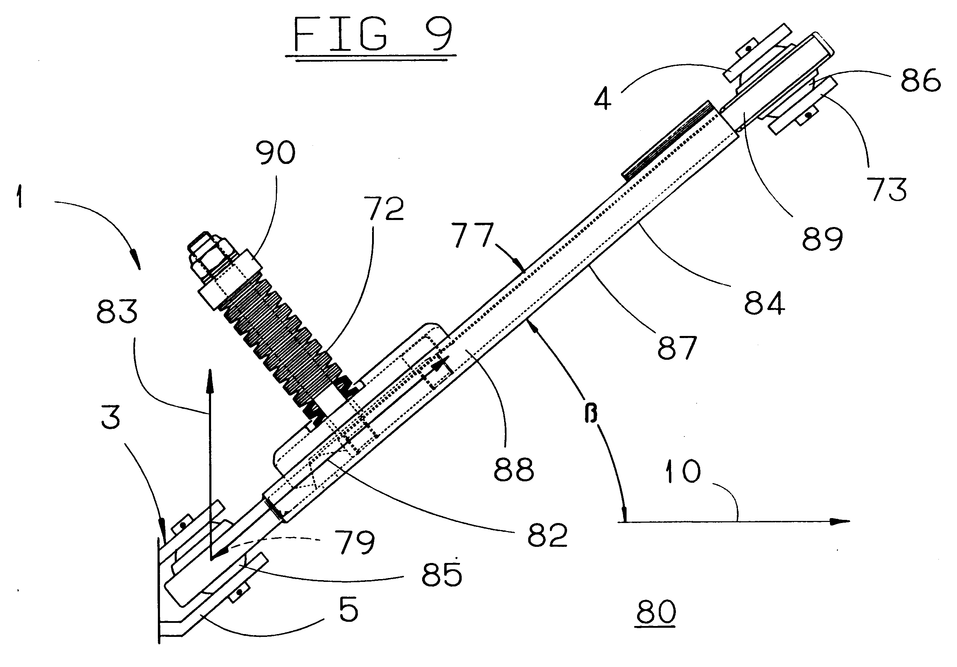

Selon l'invention, cette faucheuse (1) comporte du reste un organe de retenue (77) (figures 2 et 9) agencé entre la poutre-support (5) et le cadre (73) de la structure d'attelage (4), empêchant dans les conditions normales de travail, le pivotement de la poutre-support (5) autour de l'axe géométrique (76A) de la liaison pivot (76). Vue suivant la direction de travail (10), la liaison (79) de l'organe de retenue (77) à la poutre-support (5) s'étend à une hauteur nettement inférieure à celle de l'axe géométrique (11A) du premier tourillon (11) et environ aux deux tiers de la distance séparant l'axe géométrique (11A) du premier tourillon (11) de l'axe géométrique (12A) du deuxième tourillon (12). Par ailleurs, ladite liaison (79) est implantée à la face frontale de la poutre-support (5). Comme représenté sur les figures 2 et 9, cet organe de retenue (77) est implanté de telle sorte qu'au travail, il ait une forte inclinaison vers le haut et vers l'avant. En effet, l'organe de retenue (77) qui s'étend au moins sensiblement dans un plan vertical (80) dirigé suivant la direction de travail (10), forme avec l'horizontale un angle (β) d'environ 45° (figure 9). A son autre extrémité longitudinale, l'organe de retenue (77) est lié au cadre (73) de la structure d'attelage (4) dans le voisinage du point d'attelage inférieur (7) en regard du mécanisme de coupe (6).

Cet organe de retenue (77) fonctionne de la manière suivante.

Au travail, le mécanisme de coupe (6) repose sur le sol avec une certaine force. En avançant, cette force engendre une résistance à l'avancement qui, grâce à l'invention, est avantageusement utilisée pour délester l'extrémité intérieure (81) du mécanisme de coupe (6).

En effet, cette résistance à l'avancement tend à faire pivoter la poutre-support (5) vers l'arrière autour de l'axe géométrique (76A) de la liaison pivot (76). Ceci créé un effort de traction (82) dans l'organe de retenue (77). Compte tenu de la forte inclinaison de l'organe de retenue (77), cet effort de traction (82) engendre une composante verticale (83) substantielle, qui tend à soulever l'extrémité extérieure de la poutre-support (5), c'est-à-dire l'extrémité intérieure (81) du mécanisme de coupe (6).

La faucheuse (1) des figures 1 à 9 qui vient d'être décrite, fonctionne de la manière suivante.

La faucheuse (1) est liée aux trois points d'attelage (8) du dispositif de relevage (9) du tracteur (2) par l'intermédiaire de sa structure d'attelage (4), et l'arbre de transmission à joints universels (24) est accouplé à la prise de force (non représentée) dudit tracteur (2).

Au travail, le mécanisme de coupe (6) s'étend dans sa position de travail, telle que représentée sur les figures 1 et 2. Le tracteur (2) déplace la faucheuse (1) dans le sens d'avance (10) au travail et sa prise de force entraîne en rotation les disques (15) par l'intermédiaire des organes de transmission (24, 25, 26, 23, 22) et des divers organes d'entraînement logés dans le carter de renvoi (19) et la barre de coupe (13).

En tournant, les outils de coupe (16) des disques (15) coupent le produit à récolter qui se trouve dans la zone de coupe et les tambours (17) calibrent l'andain de produit coupé déposé derrière le mécanisme de coupe (6).

Etant donné que la poutre-support (5) pivote quelque peu autour de l'axe géométrique (11A) du premier tourillon (11) et que le mécanisme de coupe (6) pivote autour de l'axe géométrique (12A) du deuxième tourillon (12) par rapport à la poutre-support (5), ledit mécanisme de coupe (6) peut bien s'adapter au relief du terrain à faucher. En avançant, l'organe de retenue (77) utilise la résistance à l'avancement du mécanisme de coupe (6) pour délester l'extrémité intérieure (81) dudit mécanisme de coupe (6). Le ressort de traction (59), quant à lui, réduit plus particulièrement la force avec laquelle l'extrémité extérieure du mécanisme de coupe (6) repose sur le sol.

Par ailleurs, comme l'organe de retenue (77) s'étend au moins sensiblement dans un plan vertical (80) dirigé suivant la direction de travail (10), l'effort de traction (82) dans l'organe de retenue (77) ne créé pas de couple néfaste autour de l'axe géométrique (11A) du premier tourillon (11).

Lorsque l'on désire transporter la faucheuse (1), on cesse d'entraîner en rotation les disques (15).

Pour placer la faucheuse (1) en position de transport (figure 3), on lève tout d'abord les trois points d'attelage (8) du dispositif de relevage (9) du tracteur (2), ce qui a pour effet de lever la faucheuse (1) dès que le pivotement de la poutre-support (5) vers le bas autour de l'axe géométrique (11A) du premier tourillon (11) est stoppé par le limiteur (29) de l'organe de verrouillage (28), et que le levier pivotant (52) bute contre le carter de renvoi (19) qui comporte une face d'appui (78) prévue à cet effet. Dans cette position andain (non représentée) où le mécanisme de coupe (6) s'étend au moins sensiblement horizontalement au-dessus du sol, on agit ensuite sur la commande à distance (39), ce qui fait pivoter le loquet (41) en position déverrouillée (figure 5). Ce faisant, le loquet (41) entraîne le verrou (32) en position verrouillée de transport. Tout en maintenant l'action sur la commande à distance (39), on commande en sus le pivotement du mécanisme de coupe (6) autour de l'axe géométrique (12A) du deuxième tourillon (12) au moyen de l'organe de manoeuvre (49). Dès lors que le mécanisme de coupe (6) est dans sa position relevée de transport, on supprime l'action de la commande à distance (39), pour permettre au loquet (41) de s'accrocher à l'organe d'accrochage (45) du mécanisme de coupe (6) sous l'action du ressort (44). Par ailleurs, l'organe de maintien (46) du mécanisme de coupe (6) comprime l'organe élastiquement déformable (47) et maintient le verrou (32) en position verrouillée. Le transport peut donc commencer.

Avantageusement, le mécanisme de coupe (6) est ainsi immobilisé par rapport à la structure d'attelage (4), ce qui limite considérablement le balancement dudit mécanisme de coupe (6).

Pour déposer la faucheuse (1) (figure 4), l'utilisateur met en premier lieu l'organe de dépose (55) en position de dépose. Ce faisant, la commande à distance (69) qui lie l'organe de dépose (55) au dispositif de commande (60), escamote la butée (64) en l'éloignant du tirant (62). Comme visible sur la figure 3, une telle manoeuvre est parfaitement possible, compte tenu du fait qu'au transport l'épaulement (65) du tirant (62) n'est plus en contact avec la butée (64). L'utilisateur agit ensuite sur l'autre commande à distance (39), ce qui écarte le loquet (41) de l'organe d'accrochage (45) du mécanisme de coupe (6). Ce dernier n'est alors plus verrouillé et l'action de l'organe élastiquement déformable (47) sur le mécanisme de coupe (6) suffit à débuter le pivotement du mécanisme de coupe (6) autour de l'axe géométrique (12A) du deuxième tourillon (12), dès que l'utilisateur autorise le retour au tracteur (2) de l'huile du vérin hydraulique (50). Ce faisant, le mécanisme de coupe (6) pivote vers sa position andain sous l'action de son poids, tout en étant amorti par l'écoulement de l'huile du vérin hydraulique (50) qui retourne au tracteur (2). Dès que le mécanisme de coupe (6) a pivoté d'un certain angle, l'utilisateur supprime l'action de la commande à distance (39), ce qui a pour effet de ramener au moins sensiblement simultanément le loquet (41) près de sa position initiale, sous l'action de son ressort (44), et le verrou (32) en position déverrouillée sous l'action de l'autre ressort (38).

Le pivotement du mécanisme de coupe (6) vers le bas est stoppé lorsque la tige du vérin hydraulique (50) est entièrement sortie. En abaissant ensuite les trois points d'attelage (8) du dispositif de relevage (9) du tracteur (2), on amène le mécanisme de coupe (6) en contact avec le sol. En continuant d'abaisser le dispositif de relevage (9), la poutre-support (5) pivote autour de l'axe géométrique (11A) du premier tourillon (11), ce qui a pour effet de décoller le levier pivotant (52) de la face d'appui (78) du carter de renvoi (19). La descente de la poutre-support (5) est stoppée lorsque dans cet exemple de réalisation la béquille (56) s'appuie sur le sol, c'est-à-dire lorsque l'axe (35) du limiteur (29) est au moins sensiblement au milieu du trou oblong (34) de la tringle (31). La faucheuse (1) repose alors longitudinalement sur le sol par l'intermédiaire du mécanisme de coupe (6) et de la béquille (56). La faucheuse (1) peut donc être dételée du tracteur (2).

Lorsque la faucheuse (1) est déposée, tel que représenté sur la figure 4, le ressort de traction (59) est détendu et le tirant (62) peut se translater dans le dispositif de commande (60).

De plus, étant donné que l'organe de retenue (77) n'est soumis à aucun effort lorsque la faucheuse (1) est dans sa position de dépose, l'attelage et la dépose de ladite faucheuse (1) sont simplifiés. En effet, en position de dépose, l'organe de retenue (77) autorise un pivotement de la structure d'attelage (4) par rapport à la poutre-support (5) autour de l'axe géométrique (11A) du premier tourillon (11) dans la limite autorisée par le limiteur (29) ou par l'organe de retenue (77).

D'autres avantages de l'organe de retenue (77) seront énoncés dans la description détaillée dudit organe de retenue (77) qui sera faite ultérieurement.

Pour amener la faucheuse (1) de sa position de dépose dans sa position de transport, on fera les différentes opérations en sens inverse. C'est-à-dire que l'on commence par lier les trois points d'attelage (7) de la structure d'attelage (4) aux trois points d'attelage (8) du dispositif de relevage (9) du tracteur (2) en pivotant, si nécessaire, la structure d'attelage (4) autour de l'axe géométrique (11A) du premier tourillon (11), et on accouple l'arbre de transmission à joints universels (24) à la prise de force (non représentée) du tracteur (2). Puis, on lève les trois points d'attelage (8) du dispositif de relevage (9) du tracteur (2), ce qui a pour effet de lever toute la faucheuse (1). L'utilisateur actionne ensuite la commande à distance (39) pour verrouiller le limiteur (29). Tout en maintenant cette action, il alimente l'organe de manoeuvre (49), de sorte à relever le mécanisme de coupe (6) dans sa position de transport. Dès que le mécanisme de coupe (6) est dans sa position relevée de transport, l'utilisateur supprime l'action de la commande à distance (39) pour permettre au loquet (41) de s'accrocher à l'organe d'accrochage (45) du mécanisme de coupe (6) sous l'action du ressort (44). Par ailleurs, l'organe de maintien (46) du mécanisme de coupe (6) comprime l'organe élastiquement déformable (47) et maintient le verrou (32) en position verrouillée. Il ne reste plus qu'à escamoter manuellement l'organe de dépose (55), ce qui par l'intermédiaire de la commande à distance (69) rapproche la butée (64) du tirant (62). Le transport peut débuter.

Pour placer la faucheuse (1) en position de travail, on commence par agir sur la commande à distance (39) du loquet (41) et on autorise simultanément le retour au tracteur (2) de l'huile contenue dans le vérin hydraulique (50). Ce faisant, le mécanisme de coupe (6) pivote vers sa position andain. Dès que le mécanisme de coupe (6) a pivoté d'un certain angle, on supprime l'action de la commande à distance (39), ce qui a pour effet de ramener au moins sensiblement simultanément le loquet (41) près de sa position initiale sous l'action de son ressort (44) et le verrou (32) en position déverrouillée sous l'action de l'autre ressort (38).

Le pivotement du mécanisme de coupe (6) vers le bas est stoppé lorsque la tige du vérin hydraulique (50) est entièrement sortie. En abaissant ensuite les trois points d'attelage (8) du dispositif de relevage (9) du tracteur (2), on amène le mécanisme de coupe (6) en contact avec le sol. On continue néanmoins d'abaisser le dispositif de relevage (9) jusqu'à ce que le limiteur (29) soit mi-ouvert, de sorte que le levier pivotant (52) soit décollé de la face d'appui (78) du carter de renvoi (19) et que l'axe (35) du limiteur (29) soit au moins sensiblement au milieu du trou oblong (34) de la tringle (31). En dernier lieu, on entraîne en rotation les disques (15) pour que le travail puisse débuter.

L'organe de retenue (77) qui apparaît en détail sur les figures 2 et 9 est une bielle (84), articulée d'une part à la poutre-support (5) au moyen d'une première liaison rotule (85) et d'autre part à la structure d'attelage (4) au moyen d'une deuxième liaison rotule (86).

Compte tenu de son faible encombrement et de sa relative simplicité de fonctionnement, l'organe de retenue (77) est relativement facile à réaliser.

Avantageusement, l'organe de retenue (77) comporte encore un tirant de sécurité (87) autorisant le pivotement vers l'arrière du mécanisme de coupe (6), lorsque ce dernier rencontre un obstacle. Ce tirant (87), connu de l'homme de l'art, comporte deux parties longitudinales (88, 89) montées coulissantes l'une dans l'autre, et un dispositif à déclenchement (90). Ce dernier maintient en position les deux parties longitudinales (88, 89) l'une par rapport à l'autre, dans les conditions normales de travail.

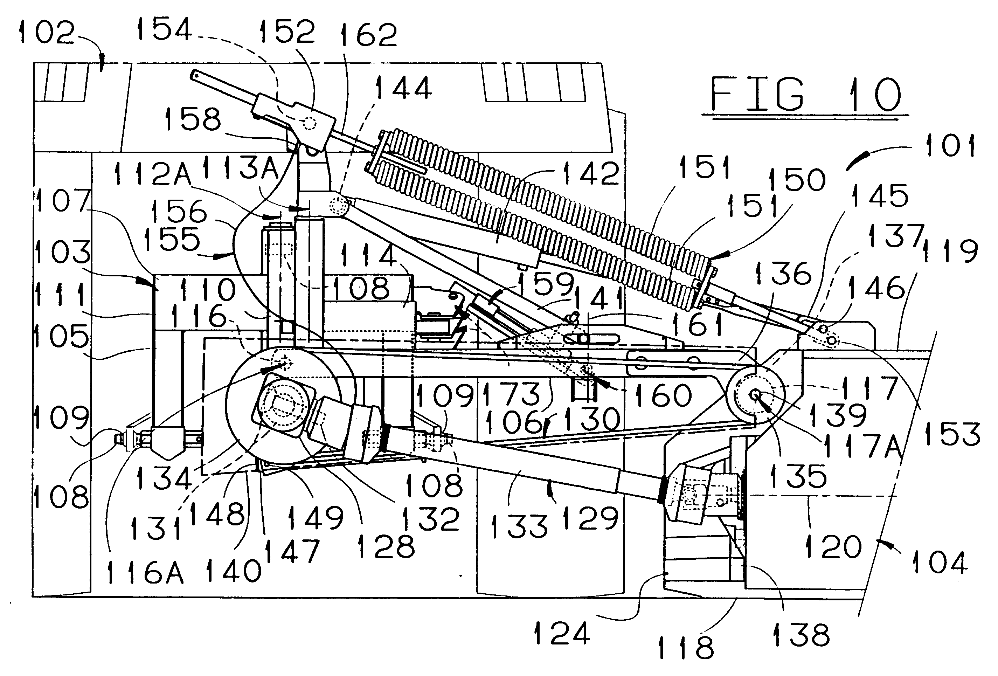

Les figures 10 à 14 montrent un autre exemple de réalisation d'une faucheuse (101) selon l'invention. Cette faucheuse (101) est attelée à un tracteur agricole (102) et comporte, sous des formes similaires ou identiques, la quasi totalité des moyens de la faucheuse (1) précédemment décrite ; ces moyens ne seront de ce fait pas tous redécrits en détail.

Cette faucheuse (101) se compose principalement d'un châssis (103) et d'un mécanisme de récolte (104). Le châssis (103) comporte principalement une structure d'attelage (105) et une poutre-support (106).

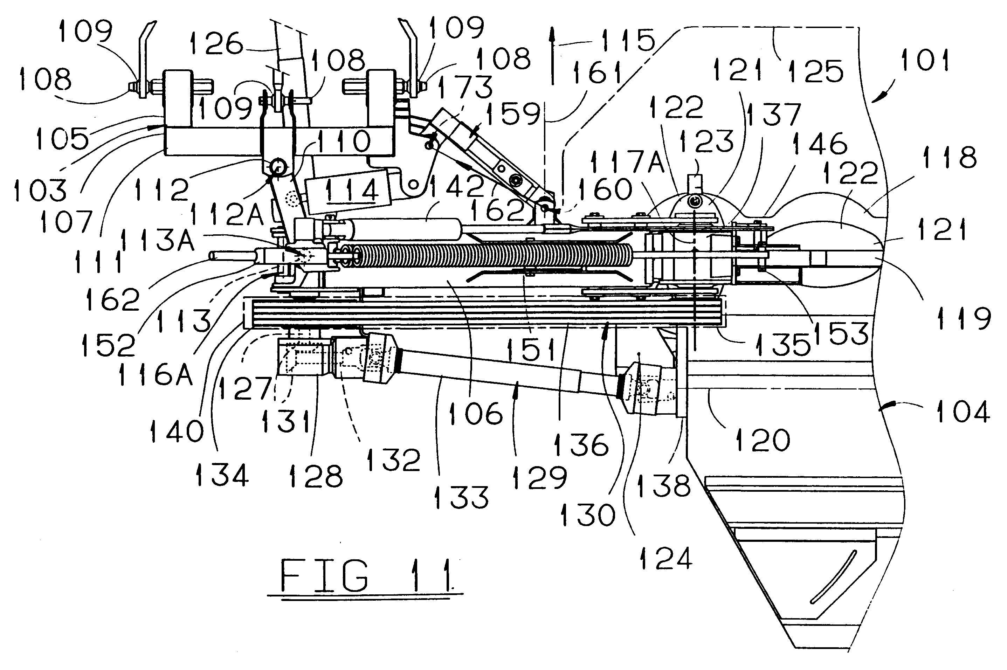

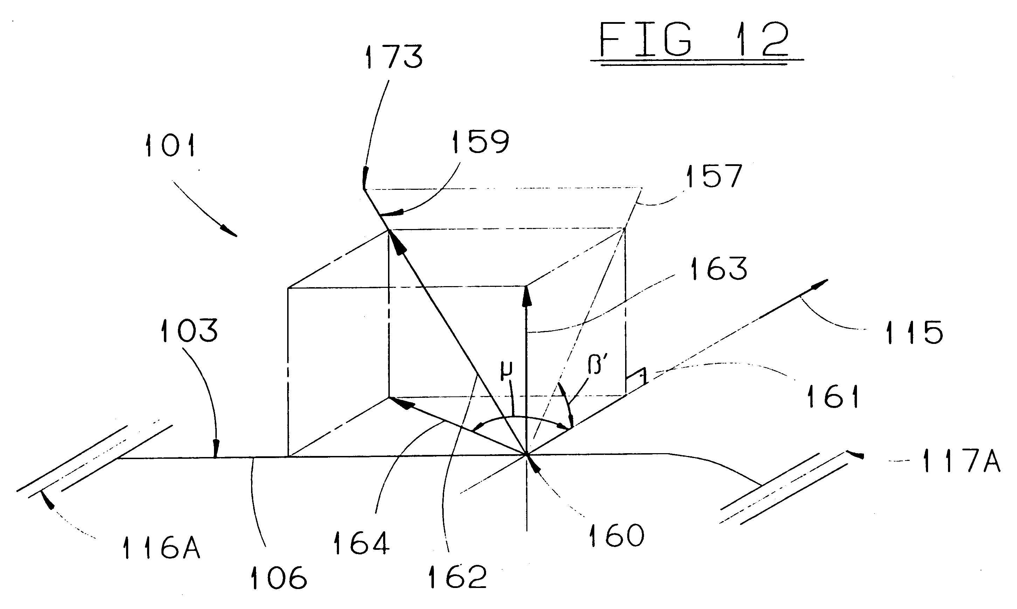

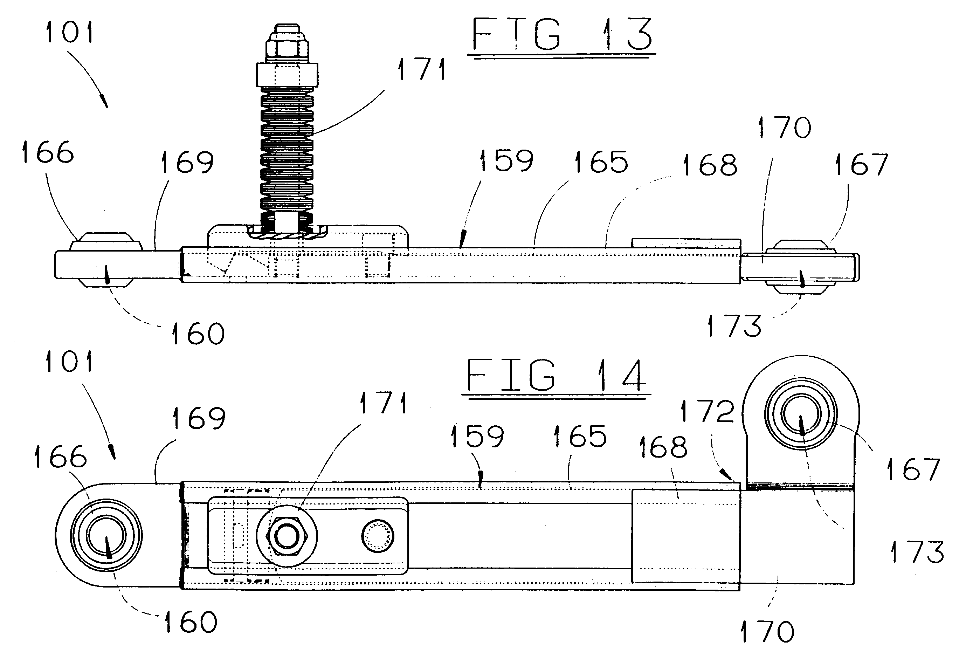

La structure d'attelage (105) comporte un portique (107) muni, à sa partie frontale, de trois points d'attelage (108) destinés à être liés aux trois points d'attelage (109) du tracteur agricole (102). Entre le portique (107) et la poutre-support (106), est implanté un bras de positionnement (110) servant à ramener la poutre-support (106) et le mécanisme de récolte (104) vers le plan médian du tracteur (102), afin d'en faciliter le transport. A cet effet, le bras de positionnement (110) de la structure d'attelage (105) est lié d'une part au moins sensiblement au milieu de la poutre supérieure (111) du portique (107), au moyen d'une articulation cylindrique (112) d'axe géométrique (112A) au moins sensiblement vertical, et d'autre part dans le voisinage de l'extrémité longitudinale intérieure de la poutre-support (106) à l'aide d'un tourillon (113) d'axe géométrique (113A) au moins sensiblement vertical. Un organe de positionnement (114), réalisé sous forme d'un vérin hydraulique, est implanté entre le bras de positionnement (110) et l'extrémité du portique (107) en regard du mécanisme de récolte (104). De cette manière, ledit bras de positionnement (110) peut être pivoté autour de l'axe géométrique (112A) de l'articulation cylindrique (112) d'une position de dépose et de travail (figures 10 et 11), dans laquelle il s'étend au moins sensiblement suivant la direction de travail (115), vers une position de transport (non représentée) dans laquelle ledit bras de positionnement (110) est au moins sensiblement parallèle à la poutre supérieure (111) du portique (107).

La poutre-support (106), quant à elle, s'étend en vue de dessus lors du travail, transversalement à la direction de travail (115) et au moins sensiblement au même niveau que la structure d'attelage (105). A son extrémité longitudinale intérieure, la poutre-support (106) est articulée à la partie inférieure du tourillon (113) au moyen d'une première liaison pivot (116) d'axe géométrique (116A) dirigé vers l'avant et s'étendant, en vue suivant la direction d'avance (115) au travail, au moins sensiblement dans le voisinage du centre du triangle défini par les trois points d'attelage (108) de la structure d'attelage (105). A son extrémité longitudinale extérieure, la poutre-support (106) du châssis (103) est articulée à l'extrémité longitudinale intérieure (124) du mécanisme de récolte (104) au moyen d'une deuxième liaison pivot (117) d'axe géométrique (117A) dirigé vers l'avant. Cette deuxième liaison pivot (117) est implantée à la partie supérieure du mécanisme de récolte (104), de sorte que durant le travail, les axes géométriques (116A, 117A) des deux liaisons pivot (116, 117) correspondantes s'étendent au moins sensiblement au même niveau, ce qui permet à la poutre-support (106) d'être dirigée au moins sensiblement horizontalement. Grâce à ce châssis (103), le mécanisme de récolte (104) peut s'étendre, lors du travail, à côté de la voie du tracteur (102) et s'adapter aisément au relief du sol.

Comme représenté sur les figures 10 et 11, le mécanisme de récolte (104) comporte une barre de coupe (118), une structure porteuse (119) et un rotor de traitement (120), dont on ne voit que l'axe de rotation. La barre de coupe (118) est équipée d'une pluralité d'organes de coupe (121) comportant des disques (122) munis à leur périphérie d'outils de coupe (123). Au travail, ces disques (122) tournent autour d'axes géométriques dirigés vers le haut. De plus, d'une manière connue de l'homme de l'art, les disques (122) qui s'étendent chacun à une extrémité longitudinale de la barre de coupe (118) sont surmontés d'un tambour (non représenté), tournant autour du même axe géométrique que le disque (122) qu'il surmonte. Ces deux tambours calibrent le flux de produit coupé par les organes de coupe (121).

Au-dessus de la barre de coupe (118) s'étend par ailleurs la structure porteuse (119) qui est notamment destinée à supporter les organes de protection (125) (représentés en traits mixtes sur la figure 11). Cette structure porteuse (119) est liée à la barre de coupe (118) au moyen de deux parois latérales (138) s'étendant vers le bas.

Le rotor de traitement (120), connu de l'homme de l'art, s'étend derrière la barre de coupe (118) et au moins sensiblement parallèlement à l'axe longitudinal de la barre de coupe (118). Ce rotor de traitement (120) est guidé en rotation dans le voisinage de ses extrémités longitudinales dans les parois latérales (138) de la structure porteuse (119) et est destiné à conditionner le produit coupé par les organes de coupe (121).

L'entraînement en rotation du rotor de traitement (120) et des disques (122) de la barre de coupe (118) s'effectue à partir du tracteur (102) auquel est attelée la faucheuse (101). En effet, c'est la prise de force (non représentée) qui entraîne, par l'intermédiaire d'un arbre télescopique à joints universels (126), l'arbre d'entrée (127) d'un carter de renvoi (128). Cet arbre d'entrée (127) transmet le mouvement de rotation d'une part au rotor de traitement (120), au moyen d'organes d'entraînement (129), et d'autre part aux disques (122) de la barre de coupe (118) à l'aide d'organes de transmission (130).

Pour communiquer le mouvement de l'arbre d'entrée (127) du carter de renvoi (128) au rotor de traitement (120), les organes d'entraînement (129) comportent successivement un couple d'engrenages coniques (131), dont l'un est solidaire dudit arbre d'entrée (127) et l'autre de l'arbre de sortie (132) du carter de renvoi (128), et un arbre télescopique à joints universels (133) s'étendant transversalement à la direction de travail (115). Cet arbre télescopique à joints universels (133) communique le mouvement de rotation de l'arbre de sortie (132) du carter de renvoi (128) au rotor de traitement (120), dont l'extrémité longitudinale traverse à cet effet la paroi latérale intérieure (138) de la structure porteuse (119).

La transmission du mouvement de rotation de l'arbre d'entrée (127) du carter de renvoi (128) aux disques (122) de la barre de coupe (118) est réalisée, comme dit précédemment, par des organes de transmission (130). Ceux-ci comportent principalement une paire de poulies (134, 135) sur lesquelles s'enroulent des courroies (136) et un carter de renvoi (137), au moyen duquel la structure porteuse (119) du mécanisme de récolte (104) est liée à la poutre-support (106).

Le carter de renvoi (137) est en effet muni de deux portées cylindriques matérialisant la deuxième liaison pivot (117) et réalisées sous forme de paliers dans lesquels est guidé en rotation un arbre d'entrée (139), dont l'axe de rotation est confondu avec l'axe géométrique (117A) de ladite deuxième liaison pivot (117). C'est au moyen de cet arbre d'entrée (139) que les disques (122) et les tambours de la barre de coupe (118) sont entraînés en rotation.

A l'arrière, l'arbre d'entrée (139) s'étend au-dehors du carter de renvoi (137) et porte l'une (135) des poulies (134, 135) des organes de transmission (130). L'autre poulie (134) est portée par l'arbre d'entrée (127) du carter de renvoi (128) qui est implanté dans le voisinage de la structure d'attelage (105). La transmission du mouvement de cette poulie (134) à la poulie (135) est assurée par les courroies (136) qui s'enroulent sur lesdites poulies (134, 135). Un capot de protection (140) (représenté en traits mixtes) entoure partiellement les poulies (134, 135) et les courroies (136).

Comme le montrent les figures 10 et 11, le châssis (103) comporte aussi un limiteur (141) servant à limiter le pivotement de la poutre-support (106) autour de l'axe géométrique (116A) de la première liaison pivot (116) et par là même, le déplacement vers le bas de la deuxième liaison pivot (117) qui lie le mécanisme de récolte (104) à la poutre-support (106). L'utilisateur peut donc, en vue du transport par exemple, actionner le dispositif de relevage du tracteur (102), de sorte à allonger au maximum le limiteur (141) et à soulever le mécanisme de récolte (104).

Pour soulever le mécanisme de récolte (104) dans sa totalité et le maintenir dans une position andain, il est encore prévu un vérin de relevage (142). Ce vérin de relevage (142) est articulé à l'une de ses extrémités longitudinales près de l'extrémité supérieure du tourillon (113) de la structure d'attelage (105), au moyen d'une articulation (144) dont l'axe géométrique s'étend au moins sensiblement parallèlement à l'axe géométrique (116A) de la première liaison pivot (116).

A son autre extrémité longitudinale, le vérin de relevage (142) présente un trou oblong (145) traversé par un axe (146) dirigé au moins sensiblement suivant la direction de travail (115) et fixé à la structure porteuse (119) du mécanisme de récolte (104). Au travail, l'axe (146) s'étend normalement au milieu du trou oblong (145) et ne gêne donc pas le déplacement en hauteur du mécanisme de récolte (104), ni son pivotement autour de l'axe géométrique (117A) de la deuxième liaison pivot (117). De plus, lorsque l'utilisateur désire placer la faucheuse (101) dans sa position andain en actionnant le relevage hydraulique du tracteur (102), le châssis (103) ainsi que l'extrémité supérieure du vérin de relevage (142) se déplacent vers le haut, amenant l'extrémité inférieure du trou oblong (145) contre l'axe (146) du mécanisme de récolte (104). Dès lors, le mécanisme de récolte (104) ne pivote plus autour de l'axe géométrique (117A) de la deuxième liaison pivot (117), mais s'éloigne du sol. Une fois dans sa position andain, la faucheuse (101) peut alors être placée dans sa position de transport, grâce au vérin de positionnement (114) qui ramène le mécanisme de récolte (104) vers le plan médian du tracteur (102) et au vérin de relevage (142) qui permet de pivoter le mécanisme de récolte (104) dans une position verticale de transport (non représenté).

Lors de la dépose de cette faucheuse (101), le mécanisme de récolte (104) repose longitudinalement sur le sol et la poutre-support (106) est supportée par un organe de dépose (147) (figure 10). Dans cet exemple de réalisation, l'organe de dépose (147) est une béquille (148) liée à la poutre-support (106) dans le voisinage de la première liaison pivot (116), à l'aide d'une articulation cylindrique (149) d'axe géométrique au moins sensiblement parallèle à l'axe géométrique (116A) de ladite première liaison pivot (116). De ce fait, la béquille (148) peut, en vue de la dépose, être pivotée d'une position de transport et de travail, dans laquelle la béquille (148) est escamotée, dans une position de dépose dans laquelle la béquille (148) est destinée à supporter la poutre-support (106).

Dans la position de dépose, il est également possible de pivoter la structure d'attelage (105) par rapport à la poutre-support (106) autour de l'axe géométrique (116A) de la première liaison pivot (116). Un tel agencement facilite substantiellement l'attelage de la faucheuse (101) aux trois points d'attelage (109) du tracteur (102).

La faucheuse (101) comporte encore un organe de délestage (150) destiné à délester le mécanisme de récolte (104) au travail. Cet organe de délestage (150) s'étend entre l'extrémité supérieure du tourillon (113) de la structure d'attelage (105) et l'extrémité intérieure de la structure porteuse (119). L'organe de délestage (150) se compose principalement d'au moins un ressort de traction (151) associé à un dispositif de commande (152). En effet, deux ressorts de traction (151) sont articulés d'une part à la structure porteuse (19) du mécanisme de récolte (4), au moyen d'un axe (153) dirigé au moins sensiblement parallèlement à l'axe géométrique (117A) de la deuxième liaison pivot (117) et d'autre part au dispositif de commande (152), au moyen d'un tirant (162) d'axe géométrique au moins sensiblement parallèle à l'axe longitudinal de chacun desdits ressorts de traction (151). Le dispositif de commande (152), quant à lui, est articulé au tourillon (113) à l'aide d'une articulation cylindrique (154) d'axe géométrique au moins sensiblement parallèle à l'axe géométrique (117A) de la deuxième liaison pivot (117). Dans cette réalisation, cette articulation cylindrique (154), liant le dispositif de commande (152) à la structure d'attelage (105), s'étend au-dessus de l'articulation (144) liant le vérin de relevage (142) à ladite structure d'attelage (105).

Le dispositif de commande (152) qui est identique à celui qui a été décrit dans le précédent exemple de réalisation, permet d'annuler l'action des ressorts de traction (151) en vue de la dépose, de sorte à autoriser, comme dit précédemment, le pivotement de la structure d'attelage (105) autour de l'axe géométrique (116A) de la première liaison pivot (116). A cet effet, le dispositif de commande (152) comporte une commande à distance (155) qui comporte une gaine (156) à l'intérieur de laquelle peut être translaté un câble (non représenté) lié d'une part à la béquille (148) et d'autre part à une butée escamotable (158) du dispositif de commande (152). De ce fait, dès que la béquille (148) est déplacée de sa position de travail vers sa position de dépose, cela a pour effet d'agir sur le dispositif de commande (152) et d'annuler l'action des ressorts de traction (151) en escamotant la butée (158).

Selon l'invention, cette faucheuse (101) comporte, du reste, un organe de retenue (159) agencé entre la poutre-support (106) et la structure d'attelage (105), empêchant dans les conditions normales de travail, le pivotement de la poutre-support (106) autour de l'axe géométrique (113A) du tourillon (113). Vue suivant la direction de travail (115), la liaison (160) de l'organe de retenue (159) à la poutre-support (106) s'étend au moins sensiblement au même niveau que l'axe géométrique (116A) de la première liaison pivot (116) et environ aux deux tiers de la distance séparant l'axe géométrique (116A) de la première liaison pivot (116) de l'axe géométrique (117A) de la deuxième liaison pivot (117). Par ailleurs, ladite liaison (160) est implantée à la face frontale de la poutre-support (106).

Comme représenté schématiquement sur la figure 12, cet organe de retenue (159) est agencé de telle sorte qu'au travail, il ait une forte inclinaison vers le haut et vers l'avant. En effet, la projection orthogonale (157) de l'organe de retenue (159) dans un plan vertical (161) dirigé suivant la direction de travail (115), forme avec l'horizontale un angle (β') d'environ 45°. En vue de dessus, l'organe de retenue (159) s'étend aussi vers l'avant et vers l'axe géométrique (116A) de la première liaison pivot (116) en formant, par rapport à la direction de travail (115), un angle (») d'environ 60°. A son autre extrémité longitudinale, l'organe de retenue (159) est lié à la structure d'attelage (105) dans le voisinage de l'extrémité longitudinale de la poutre supérieure (111), dirigée vers le mécanisme de récolte (104).

Comme décrit dans l'exemple de réalisation précédent, le mécanisme de récolte (104) repose sur le sol avec une certaine force. En avançant, cette force engendre une résistance à l'avancement qui, grâce à l'invention, est avantageusement utilisée pour délester l'extrémité intérieure (124) du mécanisme de récolte (104).

En effet, cette résistance à l'avancement tend à faire pivoter la poutre-support (106) vers l'arrière autour de l'axe géométrique (113A) du tourillon (113). Ceci créé un effort de traction (162) dans l'organe de retenue (159). Compte tenu de la forte inclinaison de l'organe de retenue (159), cet effort de traction (162) engendre une composante verticale (163) substantielle qui tend à soulever l'extrémité extérieure de la poutre-support (106), c'est-à-dire l'extrémité intérieure (124) du mécanisme de récolte (104).

Par ailleurs, comme la liaison (160) liant l'organe de retenue (159) à la poutre-support (106) est implantée au moins sensiblement au même niveau que l'axe géométrique (116A) de la première articulation (116), la composante horizontale (164) dudit effort de traction (162) ne créé pas d'effet néfaste.

Grâce à l'organe de retenue (159) selon l'invention, l'extrémité intérieure (124) du mécanisme de récolte (104) peut ainsi être aisément délestée. Le délestage de l'extrémité extérieure du mécanisme de récolte (104) est, quant à lui, assuré par l'organe de délestage (50) qui créé un couple autour de l'axe géométrique (117A), tout en participant au délestage de l'extrémité intérieure (124) du mécanisme de récolte (104).

De plus, étant donné que l'organe de retenue (159) n'est soumis à aucun effort lorsque la faucheuse (101) est dans sa position de dépose, l'attelage et la dépose de ladite faucheuse (101) sont simplifiés. Effectivement, en position de dépose, l'organe de retenue (159) autorise le pivotement de la structure d'attelage (105) par rapport à la poutre-support (106) autour de l'axe géométrique (116A) de la première articulation (116).

Du reste, compte tenu de son faible encombrement et de sa simplicité de fonctionnement, l'organe de retenue (159) est relativement facile à réaliser. En effet, comme visible sur les figures 10, 11, 13 et 14, l'organe de retenue (159) est une bielle (165) articulée d'une part à la poutre-support (106) au moyen d'une première liaison rotule (166) et d'autre part à la structure d'attelage (105) au moyen d'une deuxième liaison rotule (167).

Avantageusement, cette bielle (165) comporte un tirant de sécurité (168) autorisant le pivotement vers l'arrière du mécanisme de récolte (104) lorsque ce dernier rencontre un obstacle. Ce tirant de sécurité (168), connu de l'homme de l'art, se compose de deux parties longitudinales (169, 170) montées coulissantes l'une dans l'autre et d'un dispositif à déclenchement (171). La partie (170) dudit tirant de sécurité (168) présente encore un coude (172). Ce coude (172) évite que le tirant de sécurité (168) et le vérin de positionnement (114) ne se gênent mutuellement, lorsque la faucheuse (101) est ramenée vers le plan médian du tracteur (102).

Du reste, cet organe de retenue (159) peut encore être lié à la structure d'attelage (105) en plusieurs points (173) implantés chacun à une hauteur différente à ladite structure d'attelage (105), de sorte à permettre à l'utilisateur de modifier l'effort de délestage par simple changement du point de liaison (173).

Finalement, différentes modifications restent possibles, notamment en ce qui concerne la constitution des divers éléments ou par substitution d'équivalents techniques, sans pour autant sortir du domaine de protection défini par les revendications. C'est ainsi notamment que, dans les exemples de réalisation décrits, il serait parfaitement possible d'implanter l'organe de retenue de l'autre côté de la première articulation (11 ; 116).

## Revendications

1. Faucheuse (1) comportant :
- un mécanisme de coupe (6) s'étendant, au travail, transversalement à la direction de travail (10),
- une structure d'attelage (4) destinée à être liée à un véhicule moteur (2),
- une poutre-support (5) liée d'une part à la structure d'attelage (4) au moyen d'une première articulation (11) d'axe géométrique (11A) dirigé vers l'avant, et liée d'autre part au mécanisme de coupe (6) à l'aide d'une deuxième articulation (12) d'axe géométrique (12A) dirigé vers l'avant, ladite première articulation (11) étant également susceptible de pivoter par rapport à la structure d'attelage (4) autour d'un troisième axe géométrique (76A) dirigé vers le haut,
et
- un organe de retenue (77) s'étendant au moins sensiblement dans un plan vertical (80) dirigé suivant la direction de travail (10) et agencé entre la poutre-support (5) et la structure d'attelage (4) empêchant, dans les conditions normales de travail, le pivotement de la poutre-support (5) autour dudit troisième axe géométrique (76A), la liaison (79) dudit organe de retenue (77) à la poutre-support (5) s'étendant, au travail, à une hauteur nettement inférieure à celle de l'axe géométrique (11A) de la première articulation (11), caractérisée par le fait que ledit organe de retenue (77) est implanté de telle sorte qu'au travail il ait une forte inclinaison vers le haut et vers l'avant, ce qui permet d'utiliser la résistance à l'avancement agissant sur le mécanisme de coupe (6) pour délester celui-ci grâce à la composante verticale (83) qui en résulte au niveau de la liaison (79) de l'organe de retenue (77) sur la poutre-support (5).

2. Faucheuse (101) comportant :
- un mécanisme de coupe (104) s'étendant, au travail, transversalement à la direction de travail (115),
- une structure d'attelage (105) destinée à être liée à un véhicule moteur (102),
- une poutre-support (106) liée d'une part à la structure d'attelage (105) au moyen d'une première articulation (116) d'axe géométrique (116A) dirigé vers l'avant, et liée d'autre part au mécanisme de coupe (104) à l'aide d'une deuxième articulation (117) d'axe géométrique (117A) dirigé vers l'avant, ladite première articulation (116) étant également susceptible de pivoter par rapport à la structure d'attelage (105) autour d'un troisième axe géométrique (113A) dirigé vers le haut,
et
- un organe de retenue (159) agencé entre la poutre-support (106) et la structure d'attelage (105) empêchant, dans les conditions normales de travail, le pivotement de la poutre-support (106) autour dudit troisième axe géométrique (113A), la liaison (160) dudit organe de retenue (159) à la poutre-support (106) s'étendant, au travail, au moins sensiblement à la même hauteur ou au-dessus de l'axe géométrique (116A) de la première articulation (116),
caractérisée par le fait que ledit organe de retenue (159) est implanté de telle sorte qu'au travail, il ait une forte inclinaison vers le haut et vers l'avant, ce qui permet d'utiliser la résistance à l'avancement agissant sur le mécanisme de coupe (104) pour délester celui-ci grâce à la composante verticale (163) qui en résulte au niveau de la liaison (160) de l'organe de retenue (159) sur la poutre-support (106).

3. Faucheuse selon la revendication 1 ou 2, caractérisée par le fait que la liaison (79 ; 160) de l'organe de retenue (77 ; 159) à la poutre-support (5 ; 106) s'étend entre l'axe géométrique (11A ; 116A) de la première articulation (11 ; 116) et l'axe géométrique (12A ; 117A) de la deuxième articulation (12 ; 117).

4. Faucheuse selon la revendication 3, caractérisée par le fait que ladite liaison (79 ; 160) s'étend dans la moitié extérieure de la poutre-support (5 ; 106) liée au mécanisme de coupe (6 ; 104).

5. Faucheuse selon la revendication 4, caractérisée par le fait que ladite liaison (79 ; 160) est située environ aux deux tiers de la distance séparant l'axe géométrique (11A ; 116A) de la première articulation (11 ; 116) de l'axe géométrique (12A ; 117A) de la deuxième articulation (12 ; 117).

6. Faucheuse selon l'une des revendications 1 à 5, caractérisée par le fait que ladite liaison (79 ; 160) est implantée à la face frontale de la poutre-support (5 ; 106).

7. Faucheuse selon l'une des revendications 1 à 6, caractérisée par le fait que la projection orthogonale (77 ; 157) de l'organe de retenue (77 ; 159) dans un plan vertical (80 ; 161) dirigé suivant la direction de travail (10 ; 115), forme avec l'horizontale un angle (β ; β') compris entre 20 et 70°.

8. Faucheuse selon la revendication 7, caractérisée par le fait que ledit angle (β ; β') est d'environ 45°.

9. Faucheuse selon la revendication 1, caractérisée par le fait que l'organe de retenue (77) est lié à la partie inférieure de la structure d'attelage (4).

10. Faucheuse selon la revendication 1 ou 9, caractérisée par le fait que la structure d'attelage (4) présente une forme globalement triangulaire comportant deux points d'attelage inférieurs (7) et un point d'attelage supérieur (7), destinés à être liés aux trois points d'attelage (8) du véhicule moteur (2) et que l'organe de retenue (77) est lié à ladite structure d'attelage (4) dans le voisinage du point d'attelage inférieur (7) en regard du mécanisme de coupe (6).

11. Faucheuse selon la revendication 2, caractérisée par le fait qu'en vue de dessus, l'organe de retenue (159) s'étend vers l'avant et vers l'axe géométrique (116A) de la première articulation (116).

12. Faucheuse selon la revendication 11, caractérisée par le fait que l'organe de retenue (159) forme, en vue de dessus, par rapport à la direction de travail (115) un angle (») d'environ 60°

13. Faucheuse selon l'une au moins des revendications 2, 11 ou 12, caractérisée par le fait que l'organe de retenue (159) est lié à la partie supérieure de la structure d'attelage (105).

14. Faucheuse selon l'une au moins des revendications 11 à 13 ou 2, caractérisée par le fait que la structure d'attelage (105) comporte un portique (107) comprenant une poutre supérieure (111) et que l'organe de retenue (159) est lié audit portique (107) dans le voisinage de l'extrémité longitudinale de ladite poutre supérieure (111) dirigée vers le mécanisme de coupe (104).

15. Faucheuse selon l'une au moins des revendications 11 à 14 ou 2, caractérisée par le fait que la structure d'attelage (105) comporte trois points d'attelage (108) destinés à être liés à l'attelage trois points (109) d'un véhicule moteur (102).

16. Faucheuse selon l'une des revendications 1 à 15, caractérisée par le fait que l'organe de retenue (159) peut être lié successivement à la structure d'attelage (105) en plusieurs points de liaison (173) implanté chacun à une hauteur différente à ladite structure d'attelage (105), de sorte à pouvoir modifier l'effort de délestage par simple changement dudit point de liaison (173).

17. Faucheuse selon l'une des revendications 1 à 16, caractérisée par le fait que l'organe de retenue (77 ; 159) est une bielle (84 ; 165) articulée d'une part à la poutre-support (5 ; 106) au moyen d'une première liaison rotule (85 ; 166) et d'autre part à la structure d'attelage (4 ; 105) au moyen d'une deuxième liaison rotule (86 ; 167).

18. Faucheuse selon l'une des revendications 1 à 17, caractérisée par le fait que l'organe de retenue (77 ; 159) est réalisé sous forme d'un tirant de sécurité (87 ; 168) autorisant le pivotement du mécanisme de coupe (6 ; 104) vers l'arrière, lorsque celui-ci rencontre un obstacle.

19. Faucheuse selon la revendication 10 ou 15, caractérisée par le fait que, vu suivant la direction d'avance (10 ; 115) au travail, l'axe géométrique (11A ; 116A) de la première articulation (11 ; 116) s'étend au moins sensiblement au centre du triangle défini par les trois points d'attelage (7 ; 108) de la structure d'attelage (4 ; 105).

20. Faucheuse selon l'une des revendications 1 à 19, caractérisée par le fait que le troisième axe géométrique (76A ; 113A) et l'axe géométrique (11A ; 116A) de la première articulation (11 ; 116) sont au moins sensiblement concourants.

21. Faucheuse selon l'une des revendications 1 à 20, caractérisée par le fait que la deuxième articulation (12 ; 117) s'étend dans le voisinage de l'extrémité intérieure (81 ; 124) du mécanisme de coupe (6 ; 104).

22. Faucheuse selon l'une des revendications 1 à 21, caractérisée par le fait que le mécanisme de coupe (6 ; 104) est en sus délesté au moyen d'un organe de délestage (58 ; 150).

23. Faucheuse selon les revendications 21 et 22, caractérisée par le fait que l'organe de délestage (58 ; 150) s'étend entre le mécanisme de coupe (6 ; 104) et la structure d'attelage (4 ; 105).

24. Faucheuse selon l'une des revendications 1 à 23, caractérisée par le fait qu'elle comporte en sus un organe de manoeuvre (49 ; 142) s'étendant entre la structure d'attelage (4 ; 105) et le mécanisme de coupe (6 ; 104), et destiné à amener le mécanisme de coupe (6 ; 104) dans une position relevée de transport.

25. Faucheuse selon l'une des revendications 1 à 24, caractérisée par le fait que lors de la dépose, le mécanisme de coupe (6 ; 104) s'étend longitudinalement sur le sol et que la poutre-support (5 ; 106) repose sur le sol au moyen d'une béquille (56 ; 148).

26. Faucheuse selon l'une des revendications 1 à 25, caractérisée par le fait qu'elle comporte aussi un dispositif de traitement (120) du produit coupé par le mécanisme de coupe (104).

## Claims

1. A mower (1) comprising:
- a cutter mechanism (6) extending, during work, transversely to the direction of work (10),
- a hitching structure (4) intended to be connected to a motor vehicle (2),
- a support beam (5) connected on the one hand to the hitching structure (4) by means of a first articulation (11) whose geometric axis (11A) is directed towards the front, and connected on the other hand to the cutter mechanism (6) with the help of a second articulation (12) whose geometric axis (12A) is directed towards the front, the said first articulation (11) also being able to be pivoted in relation to the hitching structure (4) about a third geometric axis (76A) directed upwardly,
and
- a retaining element (77) extending at least approximately in a vertical plane (80) directed along the direction of work (10) and arranged between the support beam (5) and the hitching structure (4) preventing, during normal working conditions, the pivoting of the support beam (5) about the said third geometric axis (76A), the connection (79) of the said retaining element (77) to the support beam (5) extending, during work, at a height less than that of the geometric axis (11A) of the first articulation (11),
characterised in that the said retaining element (77) is arranged in such a way that during work it has a strong inclination upwardly and to the front, which allows the resistance to the advancement acting on the cutter mechanism (6) to be used in order to lighten this thanks to the vertical component (83) which results in the region of the connection (79) of the retaining element (77) on the support beam (5).

2. A mower (101) comprising:
- a cutter mechanism (104) extending, during work, transversely to the direction of work (115),
- a hitching structure (105) intended to be connected to a motor vehicle (102),
- a support beam (106) connected on the one hand to the hitching structure (105) by means of a first articulation (116) whose geometric axis (116A) is directed towards the front, and connected on the other hand to the cutter mechanism (104) with the help of a second articulation (117) whose geometric axis (117A) is directed towards the front, the said first articulation (116) also being able to be pivoted in relation to the hitching structure (105) about a third geometric axis (113A) directed upwardly,
and
- a retaining element (159) arranged between the support beam (106) and the hitching structure (105) preventing, during normal working conditions, the pivoting of the support beam (106) about the said third geometric axis (113A), the connection (160) of the said retaining element (159) to the support beam (106) extending, during work, at least approximately at the same height or higher than the geometric axis (116A) of the first articulation (116),
characterised in that the said retaining element (159) is arranged in such a way that during work it has a strong inclination upwardly and to the front, which allows the resistance to the advancement acting on the cutter mechanism (104) to be used in order to lighten this thanks to the vertical component (163) which results in the region of the connection (160) of the retaining element (159) on the support beam (106).

3. A mower in accordance with claim 1 or 2 characterised in that the connection (79; 160) of the retaining element (77; 159) to the support beam (5; 106) extends between the geometric axis (11a; 116A) of the first articulation (11; 116) and the geometric axis (12A; 117A) of the second articulation (12; 117).

4. A mower in accordance with claim 3 characterised in that the said connection (79; 160) extends in the outer half of the support beam (5; 106) connected to the cutter mechanism (6; 104).

5. A mower in accordance with claim 4 characterised in that the said connection (79; 160) is situated at about two thirds of the distance separating the geometric axis (11A; 116A) of the first articulation (11; 116) from the geometric axis (12A; 117A) of the second articulation (12; 117).

6. A mower in accordance with one of claims 1 to 5 characterised in that the said connection (79; 160) is arranged at the front face of the support beam (5; 106).

7. A mower in accordance with one of claims 1 to 6 characterised in that the orthogonal projection (77; 157) of the retaining element (77; 159) in a vertical plane (80; 161) directed along the direction of work (10; 115), forms with the horizontal an angle (β;β') of between 20 and 70°.

8. A mower in accordance with claim 7 characterised in that the said angle (β;β') is about 45°.

9. A mower in accordance with claim 1 characterised in that the retaining element (77) is connected to the lower part of the hitching structure (4).

10. A mower in accordance with claim 1 or 9 characterised in that the hitching structure (4) has an overall triangular shape having two lower hitching points (7) and an upper hitching point (7), intended to be connected to the three hitching points (8) of the motor vehicle (2) and in that the retaining element (77) is connected to the said hitching structure (4) in the vicinity of the lower hitching point (7) opposite the cutter mechanism (6).

11. A mower in accordance with claim 2 characterised in that when seen from above, the retaining element (159) extends towards the front and towards the geometric axis (116A) of the first articulation (116).

12. A mower in accordance with claim 11 characterised in that the retaining element (159) forms, when seen from above, in relation to the direction of work (115) an angle (») of about 60°.

13. A mower in accordance with one at least of claims 2, 11 or 12 characterised in that the retaining element (159) is connected to the upper part of the hitching structure (105).

14. A mower in accordance with one at least of claims 11 to 13 or 2 characterised in that the hitching structure (105) has an arch (107) comprising an upper beam (111) and in that the retaining element (159) is connected to the said arch (107) in the vicinity of the longitudinal end of the said upper beam (111) directed towards the cutter mechanism (104).

15. A mower in accordance with one at least of claims 11 to 14 or 2 characterised in that the hitching structure (105) has three hitching points (108) intended to be connected to the three point hitching (109) of a motor vehicle (102).

16. A mower in accordance with one of claims 1 to 15 characterised in that the retaining element (159) may be connected successively to the hitching structure (105) at several connection points (173) each established at a different height to the said hitching structure (105), in such a way as to be able to modify the lightening force by the simple changing of the said connection point (173).

17. A mower in accordance with one of claims 1 to 16 characterised in that the retaining element (77; 159) is a link (84; 165) articulated on the one hand to the support beam (5; 106) by means of a first ball connection (85; 166) and on the other hand to the hitching structure (4; 105) by means of a second ball connection (86; 167).

18. A mower in accordance with one of claims 1 to 17 characterised in that the retaining element (77; 159) is made in the form of a security tie rod (87; 168) allowing the pivoting of the cutter mechanism (6; 104) towards the rear when this meets with an obstacle.

19. A mower in accordance with claim 10 or 15 characterised in that, when seen along the direction of advance (10; 115) during work, the geometric axis (11A; 116A) of the first articulation (11; 116) extends at least approximately to the centre of the triangle defined by the three hitching points (7; 108) of the hitching structure (4; 105).

20. A mower in accordance with one of claims 1 to 19 characterised in that the third geometric axis (76A; 113A) and the geometric axis (11A; 116A) of the first articulation (11; 116) are at least approximately concurrent.

21. A mower in accordance with one of claims 1 to 20 characterised in that the second articulation (12; 117) extends in the vicinity of the inner end (81; 124) of the cutter mechanism (6; 104).

22. A mower in accordance with one of claims 1 to 21 characterised in that the cutter mechanism (6; 104) is in addition lightened by means of a lightening element (58; 150).

23. A mower in accordance with claims 21 and 22 characterised in that the lightening element (58; 150) extends between the cutter mechanism (6; 104) and the hitching structure (4; 105).

24. A mower in accordance with one of claims 1 to 23 characterised in that it has in addition a manoeuvring element (49; 142) extending between the hitching structure (4; 105) and the cutter mechanism (6; 104), and intended to bring the cutter mechanism (6; 104) into a raised transport position.

25. A mower in accordance with one of claims 1 to 24 characterised in that when put down, the cutter mechanism (6; 104) extends longitudinally along the ground and in that the support beam (5; 106) rests on the ground by means of a stand (56; 148).

26. A mower in accordance with one of claims 1 to 25 characterised in that it also has a device (120) for the treatment of the product cut by the cutter mechanism (104).

## Patentansprüche

1. Mähmaschine (1), die
- einen Scheidmechanismus (6), der sich, im Betrieb, quer zur Arbeitsrichtung (10) erstreckt,
- eine Kupplungsanordnung (4), die dazu bestimmt ist, mit einem Motorfahrzeug (2) verbunden zu werden,
- einen Trägerbalken (5), der einerseits mit der Kupplungsanordnung (4) mittels eines ersten Gelenks (11) mit einer nach vorne gerichteten geometrischen Achse (11A) und anderseits mit dem Schneidmechanismus (6) mittels eines zweiten Gelenks (12) mit einer nach vorne gerichteten geometrischen Achse (12A) verbunden ist, wobei das erste Gelenk (11) auch in bezug auf die Kupplungsanordnung (4) um eine dritte, nach oben gerichtete geometrische Achse (76A) drehbar ist,
und
- ein Halteorgan (77), das sich zumindest im wesentlichen in einer in Arbeitsrichtung (10) gerichteten Vertikalebene (80) erstreckt und das zwischen dem Trägerbalken (5) und der Kupplungsanordnung (4) angeordnet ist, wodurch, unter normalen Arbeitsbedingungen, das Schwenken des Trägerbalkens (5) um die dritte geometrische Achse (76A) verhindert wird, wobei sich die Verbindung (79) des Halteorgans (77) mit dem Trägerbalken (5) im Betrieb in deutlich niedrigerer Höhe als diejenige der geometrischen Achse (11A) des ersten Gelenks (11) erstreckt, umfaßt,
dadurch gekennzeichnet, daß das Halteorgan (77) derart angeordnet ist, daß es im Betrieb eine starke Neigung nach oben und nach vorne hat, was ermöglicht, den Vorschubwiderstand, der auf den Schneidmechanismus (6) wirkt, zur Entlastung desselben dank der Vertikalkomponente (83), die im Bereich der Verbindung (79) des Halteorgans (77) mit dem Trägerbalken (5) auftritt, zu verwenden.

2. Mähmaschine (101), die
- einen Scheidmechanismus (104), der sich, im Betrieb, quer zur Arbeitsrichtung (115) erstreckt,
- eine Kupplungsanordnung (105), die dazu bestimmt ist, mit einem Motorfahrzeug (102) verbunden zu werden,
- einen Trägerbalken (106), der einerseits mit der Kupplungsanordnung (105) mittels eines ersten Gelenks (116) mit einer nach vorne gerichteten geometrischen Achse (116A) und anderseits mit dem Schneidmechanismus (104) mittels eines zweiten Gelenks (117) mit einer nach vorne gerichteten geometrischen Achse (117A) verbunden ist, wobei das erste Gelenk (116) auch in bezug auf die Kupplungsanordnung (105) um eine dritte, nach oben gerichtete geometrische Achse (113A) drehbar ist,
und
- ein Halteorgan (159), das zwischen dem Trägerbalken (106) und der Kupplungsanordnung (105) angeordnet ist, wodurch, unter normalen Arbeitsbedingungen, das Schwenken des Trägerbalkens (106) um die dritte geometrische Achse (113A) verhindert wird, wobei sich die Verbindung (160) des Halteorgans (159) mit dem Trägerbalken (106), im Betrieb, zumindest im wesentlichen in gleicher Höhe oder oberhalb der geometrischen Achse (116A) des ersten Gelenks (116) erstreckt,
umfaßt,
dadurch gekennzeichnet, daß das Halteorgan (159) derart angeordnet ist, daß es im Betrieb eine starke Neigung nach oben und nach vorne hat, was ermöglicht, den Vorschubwiderstand, der auf den Schneidmechanismus (104) wirkt, zur Entlastung desselben dank der Vertikalkomponente (163), die im Bereich der Verbindung (160) des Halteorgans (159) mit dem Trägerbalken (106) auftritt, zu verwenden.

3. Mähmaschine nach Anspruch 1 oder 2, dadurch gekennzeichnet, daß die Verbindung (79; 160) des Halteorgans (77; 159) mit dem Trägerbalken (5; 106) sich zwischen der geometrischen Achse (11A; 116A) des ersten Gelenks (11; 116) und der geometrischen Achse (12A; 117A) des zweiten Gelenks (12; 117) erstreckt.

4. Mähmaschine nach Anspruch 3, dadurch gekennzeichnet, daß diese Verbindung (79; 160) sich in der äußeren Hälfte des Trägerbalkens (5; 106), der mit dem Schneidmechanismus (6; 104) verbunden ist, erstreckt.

5. Mähmaschine nach Anspruch 4, dadurch gekennzeichnet, daß diese Verbindung (79; 160) in ungefähr zwei Drittel des Abstandes angeordnet ist, der die geometrische Achse (11A; 116A) des ersten Gelenks (11; 116) von der geometrischen Achse (12A; 117A) des zweiten Gelenks (12; 117) trennt.

6. Mähmaschine nach einem der Ansprüche 1 bis 5, dadurch gekennzeichnet, daß diese Verbindung (79; 160) an der Stirnseite des Trägerbalkens (5; 106) angeordnet ist.

7. Mähmaschine nach einem der Ansprüche 1 bis 6, dadurch gekennzeichnet, daß die rechtwinkelige Projektion (77; 157) des Halteorgans (77; 159) in eine in Arbeitsrichtung (10; 115) gerichtete Vertikalebene (80; 161) mit der Horizontalen einen Winkel (β; β') zwischen 20 und 70° bildet.

8. Mähmaschine nach Anspruch 7, dadurch gekennzeichnet, daß dieser Winkel (β; β') ungefähr 45° ist.

9. Mähmaschine nach Anspruch 1, dadurch gekennzeichnet, daß das Halteorgan (77) mit dem unteren Teil der Kupplungsanordnung (4) verbunden ist.

10. Mähmaschine nach Anspruch 1 oder 9, dadurch gekennzeichnet, daß die Kupplungsanordnung (4) insgesamt eine Dreieckform hat, die zwei untere Kupplungspunkte (7) und einen oberen Kupplungspunkt (7) aufweist, die dazu bestimmt sind, mit den drei Kupplungspunkten (8) des Motorfahrzeugs (2) verbunden zu werden, und daß das Halteorgan (77) mit dieser Kupplungsanordnung (4) in der Nähe des sich auf der Seite des Schneidmechanismus (6) befindlichen unteren Kupplungspunktes (7) verbunden ist.

11. Mähmaschine nach Anspruch 2, dadurch gekennzeichnet, daß sich, von oben gesehen, das Halteorgan (159) nach vorne und zur geometrischen Achse (116A) des ersten Gelenks (116) erstreckt.

12. Mähmaschine nach Anspruch 11, dadurch gekennzeichnet, daß das Halteorgan (159), von oben gesehen, bezogen auf die Arbeitsrichtung (115) einen Winkel (») von ungefähr 60° bildet.

13. Mähmaschine nach mindestens einem der Ansprüche 2, 11 oder 12, dadurch gekennzeichnet, daß das Halteorgan (159) mit dem oberen Teil der Kupplungsanordnung (105) verbunden ist.

14. Mähmaschine nach mindestens einem der Ansprüche 11 bis 13 oder 2, dadurch gekennzeichnet, daß die Kupplungsanordnung (105) ein Tragwerk (107) aufweist, das einen oberen Balken (111) umfaßt, und daß das Halteorgan (159) mit diesem Tragwerk (107) in der Nähe des gegen den Schneidmechanismus (104) gerichteten Längsendes des oberen Balkens (111) verbunden ist.

15. Mähmaschine nach mindestens einem der Ansprüche 11 bis 14 oder 2, dadurch gekennzeichnet, daß die Kupplungsanordnung (105) drei Kupplungspunkte (108) umfaßt, die dazu bestimmt sind, mit der Dreipunktkupplung (109) eines Motorfahrzeugs (102) verbunden zu werden.

16. Mähmaschine nach einem der Ansprüche 1 bis 15, dadurch gekennzeichnet, daß das Halteorgan (159) nacheinander mit der Kupplungsanordnung (105) an mehreren Verbindungspunkten (173) verbunden werden kann, die jeweils in unterschiedlicher Höhe derart an der Kupplungsanordnung (105) angeordnet sind, daß die Entlastungswirkung durch einfachen Wechsel des Verbindungspunktes (173) verändert werden kann.

17. Mähmaschine nach einem der Ansprüche 1 bis 16, dadurch gekennzeichnet, daß das Halteorgan (77; 159) eine Stange (84; 165) ist, die einerseits mit dem Trägerbalken (5; 106) mittels eines ersten Kugelgelenks (85; 166) und anderseits mit der Kupplungsanordnung (4; 105) mittels eines zweiten Kugelgelenks (86; 167) gelenkig verbunden ist.

18. Mähmaschine nach einem der Ansprüche 1 bis 17, dadurch gekennzeichnet, daß das Halteorgan (77; 159) in Form einer Sicherungsstange (87; 168) ausgebildet ist, die die Verschwenkung des Schneidmechanismus (6; 104) nach hinten gestattet, wenn dieser auf ein Hindernis trifft.

19. Mähmaschine nach Anspruch 10 oder 15, dadurch gekennzeichnet, daß in Arbeitsvorschubrichtung (10; 115) gesehen die geometrische Achse (11A; 116A) des ersten Gelenks (11; 116) sich zumindest im wesentlichen in der Mitte des durch die drei Kupplungspunkte (7; 108) der Kupplungsanordnung (4; 105) definierten Dreiecks erstreckt.

20. Mähmaschine nach einem der Ansprüche 1 bis 19, dadurch gekennzeichnet, daß die dritte geometrische Achse (76A; 113A) und die geometrische Achse (11A; 116A) des ersten Gelenks (11; 116) zumindest im wesentlichen in einem Punkt zusammenlaufen.

21. Mähmaschine nach einem der Ansprüche 1 bis 20, dadurch gekennzeichnet, daß das zweite Gelenk (12; 117) sich in der Nähe des inneren Endes (81; 124) des Schneidmechanismus (6; 104) erstreckt.

22. Mähmaschine nach einem der Ansprüche 1 bis 21, dadurch gekennzeichnet, daß der Schneidmechanismus (6; 104) noch mittels eines Entlastungsorgans (58; 150) entlastet ist.

23. Mähmaschine nach den Ansprüchen 21 und 22, dadurch gekennzeichnet, daß das Entlastungsorgan (58; 150) sich zwischen dem Schneidmechanismus (6; 104) und der Kupplungsanordnung (4; 105) erstreckt.

24. Mähmaschine nach einem der Ansprüche 1 bis 23, dadurch gekennzeichnet, daß sie noch ein Betätigungsorgan (49; 142) umfaßt, das sich zwischen der Kupplungsanordnung (4; 105) und dem Schneidmechanismus (6; 104) erstreckt und das dazu bestimmt ist, den Schneidmechanismus (6; 104) in eine angehobene Transportstellung zu bringen.

25. Mähmaschine nach einem der Ansprüche 1 bis 24, dadurch gekennzeichnet, daß in der Abstellage der Schneidmechanismus (6; 104) sich längs auf dem Boden erstreckt und daß der Trägerbalken (5; 106) auf dem Boden mittels einer Stütze (56; 148) aufruht.

26. Mähmaschine nach einem der Ansprüche 1 bis 25, dadurch gekennzeichnet, daß sie auch eine Behandlungsvorrichtung (120) für das durch den Schneidmechanismus (104) geschnittene Gut umfaßt.
